(19) Europäisches Patentamt

European Patent Office

Office européen des brevets

(11) **EP 1 077 396 A1**

## (12) EUROPEAN PATENT APPLICATION
published in accordance with Art. 158(3) EPC

(43) Date of publication:
21.02.2001 Bulletin 2001/08

(51) Int. Cl.[7]: **G05B 19/05**

(21) Application number: **99900343.7**

(86) International application number:
**PCT/JP99/00137**

(22) Date of filing: **19.01.1999**

(87) International publication number:
**WO 99/36842 (22.07.1999 Gazette 1999/29)**

(84) Designated Contracting States:
**CH DE ES FR GB IT LI SE**

(30) Priority: **20.01.1998 JP 850098**

(71) Applicant: **Nishikawa, Takashi**
**Yokohama-shi, Kanagawa 234-0055 (JP)**

(72) Inventor: **Nishikawa, Takashi**
**Yokohama-shi, Kanagawa 234-0055 (JP)**

(74) Representative: **Betten & Resch**
**Reichenbachstrasse 19**
**80469 München (DE)**

## (54) SEQUENCE CONTROL METHOD

(57) A method of the sequence control comprehensible to everybody, without needing the ladder diagram and programming, aiming at replacing with the programmable logic controller (PLC) is disclosed. A relation vector, a bit-series describing the required state of all the input terms at a certain time step point in course of the progress of the control to get the intended state of a certain output signal, is defined. The state of a certain output term at a certain time step point is obtained by a defined bit-wise calculation between the relation vector and the input vector, a bit-series describing the states of all the input terms at the time step point. In order to obtain necessary states of the output terms according to the progress of the control, a relation matrix is defined where all relation vectors for intended output terms at intended time step point are provided and arranged in order of time step point number. When executing the control, an operation, the defined bit-wise calculation between the relation vector arranged on the line of the relation matrix corresponding to the time step point and the input vector at the time to get the state of output term at the time step point. The relation matrix is set up separately for a sequence mode, where the sequence of the control is explicitly defined, and for a logic mode, where the sequence of the control is not defined. The operation for execution of the control for the sequence mode can be limited to the line of the matrix vector corresponding to the time step point in progress and the operation for the all lines of the relation matrix is not necessary. It is possible to derive the input and output terms necessary for realizing the intended control automatically based on the action chart through a timing chart.

FIG. 1

## Description

[TECHNICAL FIELD]

The present invention relates to the sequence control. More precisely, the present invention relates to the sequence control by a programming-free controller based on a computer in place of a programmable logic controller (PLC).

[TECHNICAL BACKGROUND]

PLC has been used in a wide range of controlling especially in the field of factory automation since its invention 30 years ago. It seems that the recent development and progress of PLC relies much on utilization of the progress in computer technology both in hardware and software, such as execution of control with higher speed chips or integration of PLC into computer networks, keeping to the same basic concept of PLC as that when it was invented. Considering the fact that it was invented in the days when the computer performance was much lower at much higher cost than those in these days, its concept for realizing a sequence control device without wiring of complicated relay circuits by picking up minimum necessary functions from the computer available at that time, PLC was indeed a convenient and useful device 30 years ago.

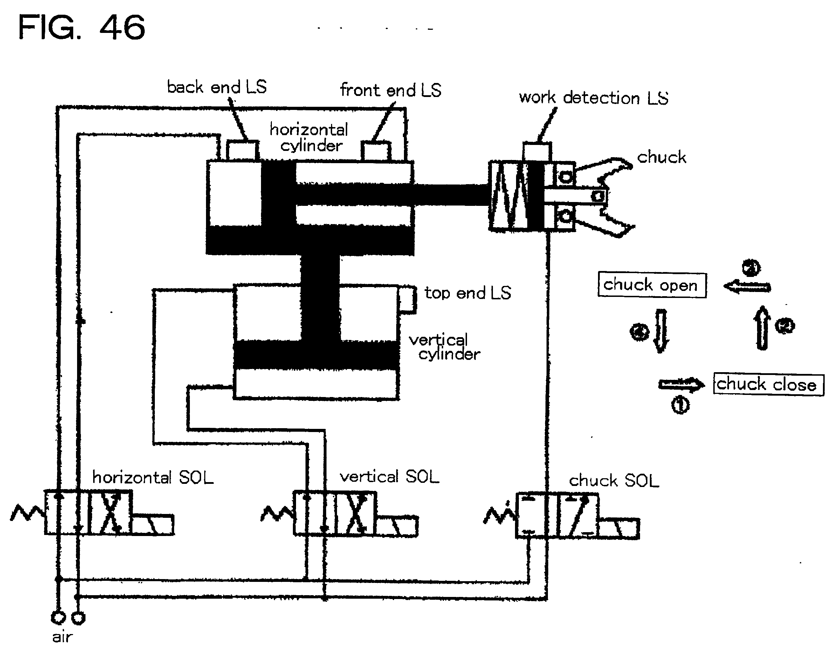

For the facility of clarifying the flow of the design work of a sequence control system using PLC, control of the picking device of an injection molder is taken as an example of which general view is as illustrated in Fig 46 (cited from reference literature 1).

For explanation of the conventional PLC for comparison with the present invention, following literature was referred to.

1: "How to use programmable logic controllers" by T.Miyata, Kogyo-Chosakai, 1993(in Japanese)
2: "A new programming technique for programmable logic controllers" by M.Aoki, Kindai-Tosho, 1994(in Japanese)
3: "Application of programmable logic controllers" by T. Sekiguchi, Denki-Tosho, 1986 (in Japanese).

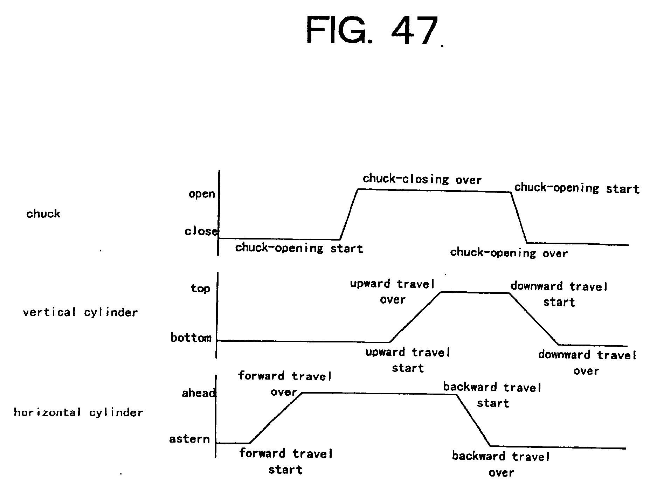

To start the programming for PLC, an action chart shown in Fig. 47 is drawn, which describes the relationship among actions of the components involved in the control object. Fig 46 tells the actions as enumerated below:

a) when the "start" is ordered, horizontal cylinder starts going forwards keeping its chuck open.
b) when it reaches the front end, the limit switch sensing the front end turns on, but the solenoid for forward movement keeps on.
C) after the set time of the delay timer is elapsed, the chuck starts closing.
d) at starting of the closing, the timer for closing time is turned on.
e) when the set time of the closing timer is elapsed, the vertical cylinder starts its travel. Here, the closing timer plays a role of a sensor for detecting opening and closing of the chuck.
f) When the vertical cylinder reaches the top end, solenoid for horizontal travel is switched off , the cylinder starts backwards and the timer for chucking is reset.
g) After reaching the back end and switching the signal for confirmation of the picking of the, work, solenoids for vertical travel and chucking are switched off, and the timer for chucking is reset as well.

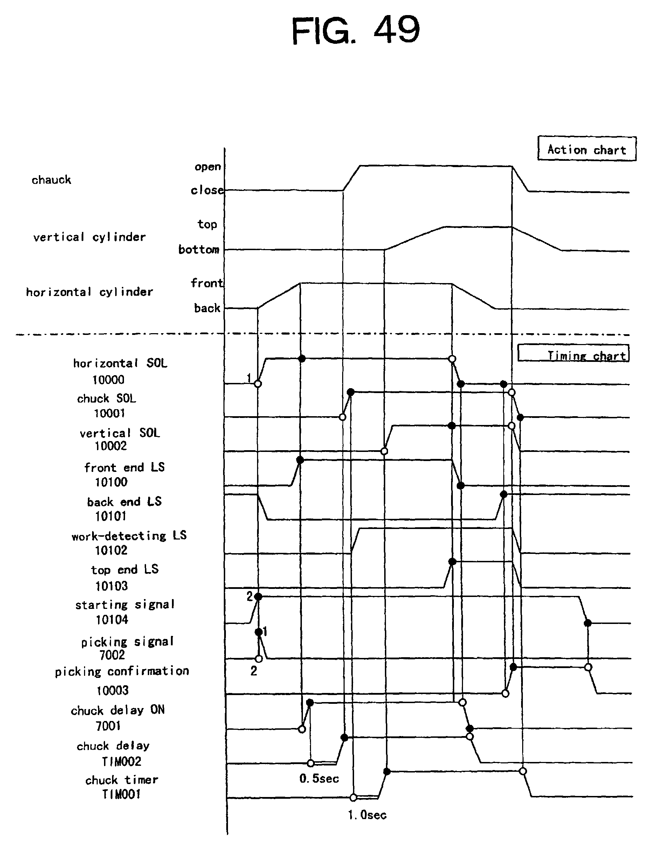

The action chart shown in Fig 47 with three lines describes the sequence of the movement of the components of the control object, chuck and cylinders. Since one can not design a sequence control system just by going through these three lines, this chart should be regarded as an auxiliary material used when a mechanical engineer designing the picking device explains the required control specification to the programmer of PLC. After picking up necessary components for control based on the action chart, a timing chart is drawn describing the relation of action of components and its sequence. An example of the timing chart drawn from the action chart is as shown in Fig 49. Necessary components to realize the intention of the control understood from reading the action chart, such as sensors, timers etc, are shown in the timing chart together with functions of each component and logical relationship, the relationship of their functions.

In a timing chart, the state or the change of state of a signal to be a cause or condition of an action is indicated with a solid mark, while the resulting change of state of a signal is indicated with a blank mark. Here, as the cause and the condition have logically the same meaning, no difference is given in marking. In the next step of designing, a ladder chart is drawn, which describes the relationship of the on/off signals among the components to realize the logical causes and results. The ladder diagram looks like the relay circuit diagram exclusively used in the days before PLC. It is presumed that the ladder diagram was devised 30 years ago so that the control engineers familiar with the relay circuit could easily shift to PLC. The program is a series of neamonic macro instructions looking like assembler ones. PLC works as an interpreter type computer interpreting these instructions.

A program for PLC based on the ladder diagram is as shown below for example:

| ADDRESS | NEAMONIC | OPERAND | COMMENT |
|---------|----------|---------|---------|
| 00000 | LD | 10102 | LS for detecting work |
| 00001 | AND | 10101 | LS at back end |
| -------- | ------ | -------- | ---------- |
| 00025 | LD | 10001 | solenoid for chuck |
| 00026 | TIM | 001 | |
| | | #001 | |
| 00027 | END | | |

As explained above, the process of programming for PLC as a principle goes along four steps, drawing the action chart, drawing the timing chart, drawing the ladder diagram and programming.

The above-described is a typical process of the programming for PLC, among which computer software is available in market for programming based on the information given by the ladder diagram. The steps upstream of the programming, for example derivation of the ladder diagram from the timing chart, are done by hands relying much on the skill and experience of the design engineers.

Most part of the process of the PLC programming, especially the steps for the timing chart, the ladder diagram and the programming, are as a matter of fact handled by professional control engineers. As a result, the mechanical engineers are obliged to be a kind of ignorant public without exact and precise knowledge of the detail of control, despite they actually design or operate the machine or equipment. This uncomfortable, fact is caused by the incomprehensibility of the ladder diagram. Indeed, most mechanical engineers can draw the action and the timing charts without much difficulty, but most of them can hardly understand the ladder diagram. They can see point-wise action of the equipment from the ladder diagram but grasping the total flow of the control from it is very difficult or almost impossible. Interpretation of the program itself is by far difficult.

Moreover, even for the professional control engineers it seems to be not so easy to see the detail of the program written by other engineers. Summing up the difficulties and shortcomings of PLC pointed out by a professional control engineer in the literature 2, the problems can be put down as follows:

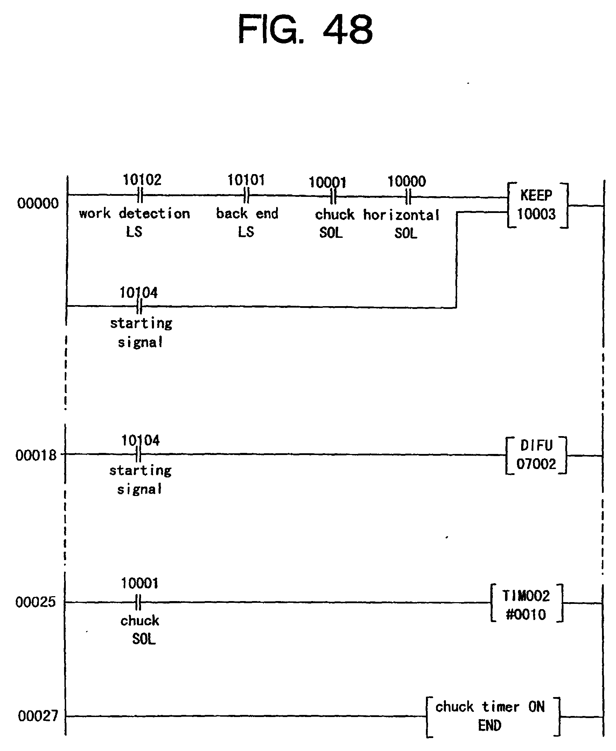

1) As each control engineer has his own way of drawing the ladder diagram and programming, it is difficult to decipher them done by other people.
2) Both ladder diagram and program describe mutual relation of signals but tells nothing about the sequence of the change of the states of signals. Therefore it is theoretically impossible to see the total flow of control.
3) Considerable training is necessary for drawing the ladder diagram and programming.
4) Generally, since it is impossible for engineers dealing with the system or machinery to draw the ladder diagram and programming, specialist is required for these kinds of job.
5) The execution of the control is done through scanning the whole program at each scanning cycle. This is because the program describes all the control actions, in the "past", "present" and "future" altogether without discriminating the sequence. Therefore, notwithstanding checking of the states of input signals for the necessary part, "present", will do in case where the sequence of the control action is explicitly described as in examples in Fig. 46-49, the PLC does not allow such a selective checking due to its concept and structure. This complexity coming from the scanning of the whole program tends to lead to danger of the malfunction due to error in programming. Moreover, it is very difficult to find the error beforehand.

The difficulties in common with professionals and ignorant public are that it is impossible or very difficult to get necessary information from the ladder diagram and the program. Most possible cause of this difficulty would be the fact that there is no way of discrimination of the past, present and future in PLC.

The source of this shortcoming would lie in the concept that PLC transfers the description method and the action of the relay circuit straightly to the computer. A typical example of this presumption is found in the structure of the program of PLC obliged to include a number of the keep relays or self-holding circuits in the program.

The fact that the PLC copies the functions of the relay switches in a computer without making use of its rich functions would be the cause of the incomprehensibility of PLC. Since the computer has made a leaping progress both in performance and favorable cost and further progress in future is commonly expected today, the time is ripe for an innovation toward more comprehensible controller by making the most of the high-graded functions of the computer.

Difficulties and their causes can be summarized as follows:

1) PLC uses a computer in place of relay switches forming logical circuits ignoring the sequence.

2) As a result that the computer replaces the relay switches, the program exclusively composed of on/off logic includes "self-holding" making itself incomprehensible.

3)As a result of the above-mentioned two facts, whole the program steps must be scanned at each scanning timing.

4)Both the ladder diagram and the program tell nothing of the flow of the control.

5)Programming for each particular control project is required.

6)The programs are not well unified as they are at a primitive level of programming language leading to difficulty in reading those written by others.

7)Since PLC has no way of judging the change of states of the input signals without scanning the whole program, it can not be event-driven.

8)From the viewpoint of the users of PLC, such as mechanical engineers and mechanical or chemical system engineers its incomprehensibility prevents them from handling PLC by themselves.

To overcome these difficulties, it is required to realize a controller everyone can easily use by making use of the computers whose performance has been noticeably improved at much lower cost. The present invention aims at supplying a system of the sequence control, the programming-free logic controller, without needing the ladder diagram and programming for each control project.

[DISCLOSURE OF THE INVENTION]

In the first part of the present invention, in a sequence control system consisting of input equipment, output equipment and actuators, to realize the intended control action by changing the states of the actuators in response to the change of state of the signals issued by the input equipment,inputting the information of the state of the action of the input and output terms, corresponding to input equipment, output equipment and actuator respectively, at each time step point representing the progress of the control into a computer,defining the state of each input and output term as 1 or 0 when its state is not at the reference state while defining the state as 0 or 1 when its state is at the reference state,deriving and storing in the computer a relation vector which is a bit series describing the required state of the input terms to get the state of an output term to enable the intended control action.

In the second part of the present invention,in a sequence control system consisting of input equipment, output equipment and actuators, to realize the intended control action by changing the states of the actuators in response to the change of state of the signals issued by the input equipment, inputting the information of the state of the action of the input and output terms, corresponding to input equipment, output equipment and actuator respectively, at each time step point representing the progress of the control into a computer, defining the state of each input and output term as 1 or 0 when its state is not at the reference state while defining the state as 0 or 1 when its state is at the reference state, deriving and storing in the computer a relation vector which is a bit series describing the required state of the input terms to get the state of an output term to enable the intended control action and setting up a relation matrix in the computer by arranging the relation vectors in order of the time step point number so that the states of plural number of output terms are obtained.

In the third part of the present invention,in a sequence control system consisting of input equipment, output equipment and actuators, to realize the intended control action by changing the states of the actuators in response to the change of state of the signals issued by the input equipment, inputting the information of the state of the action of the input and output terms, corresponding to input equipment, output equipment and actuator respectively, at each time step point representing the progress of the control into a computer, generating an input vector which is a bit series whose component bits are states of all the input terms at a time step point defining the state of each input and output term as 1 or 0 when its state is not at the reference state while defining the state as 0 or 1 when its state is at the reference state and setting it in the computer memory.

In the fourth part of the present invention,in a sequence control system consisting of input equipment, output equipment and actuators, to realize the intended control action by changing the states of the actuators in response to the change of state of the signals issued by the input equipment,inputting the information of the state of the action of the input and output terms, corresponding to input equipment, output equipment and actuator respectively, at each time step point representing the progress of the control into a computer, defining the state of each input and output term as 1 or 0 when its state is not at the reference state while defining the state as 0 or 1 when its state is at the reference state,

deriving and storing in the computer a relation vector which is a bit series describing the required state of the input terms to get the state of an output term to realize the intended control action and obtaining the state of an output term through a defined bit-wise operation between the input vector at a time step point and the relation vector corresponding to the same time step point.

In the fifth part of the present invention,in a sequence control system consisting of input equipment, output equipment and actuators, to realize the intended control action by changing the states of the actuators in response to the change of state of the signals issued by the input equipment, inputting the information of the state of the action of the input and output terms, corresponding to input equipment, output equipment and actuator respectively, at each time step point representing the progress of the control into a computer, defining the state of each input and output term as 1 or 0 when its state is not at the reference state while defining the state as 0 or 1 when its state is at the reference state and setting up a coordinate system on the computer display consisting of a horizontal axis representing the time step point and a vertical axis with multiple stages to represent the state of the action of the input and output terms.

In the sixth part of the present invention, in a sequence control system consisting of input equipment, output equipment and actuators, to realize the intended control action by changing the states of the actuators in response to the change of state of the signals issued by the input equipment, inputting the information of the state of the action of the input and output terms, corresponding to input equipment, output equipment and actuator respectively, at each time step point representing the progress of the control into a computer, defining the state of each input and output term as 1 or 0 when its state is not at the reference state while defining the state as 0 or 1 when its state is at the reference state,drawing the timing chart on the computer display,drawing an action chart of each input and output term on said coordinate system on the computer display illustrating the progress of the state by a horizontal line on a certain stage while the state keeps on a certain state and a straight line during transition of state connecting the point representing the starting stage level at the starting time step point and the completing stage level at the time step point of completing the transition, deriving additional input and output equipment necessary for realizing the intended control action and their related input and output terms according to prescribed rule referring to the action chart and by drawing the progress of the state of the derived input and output terms on the said coordinate system on the computer display.

[BRIEF DESCRIPTION OF THE DRAWINGS]

Fig 1 is a general flow chart of the control system by the present invention.
Fig 2 is a data unit with multiple steps.
Fig 3 is a data unit with single step.
Fig 4 is a data unit of a quick acting type.
Fig 5 is a data unit of a slow acting type.
Fig 6 is a state vector of a single stage quick acting type.
Fig 7 is a state vector of a single stage slow acting type.
Fig 8 is a partial bit series of a single stage type representing a case without change of state.
Fig 9 is a partial bit series of a single stage quick acting type representing a case with change of state.
Fig 10 is a partial bit series of a single stage slow acting type representing a case with change of state.
Fig 11 illustrates the state change vector of a single stage quick acting type data unit.
Fig 12 illustrates the state change vector of a single stage slow acting type data unit.
Fig 13 indicates the action chart of the picking device to help explain the concept of the control system of the present invention.
Fig 14 indicates the timing chart of the picking device to derived from the action chart in Fig 13 to help explain the concept of the control system of the present invention.
Fig 15 is continued from Fig 14 indicating the timing chart of the picking device to derived from the action chart in Fig 13 to help explain the concept of the control system of the present invention.
Fig 16 is continued from Fig 15 indicating the timing chart of the picking device to derived from the action chart in Fig 13 to help explain the concept of the control system of the present invention.
Fig 17 illustrates the action chart and the derived timing chart for a case where the control object shifts its position from A to B.
Fig 18 indicates the definite after removing the unnecessary signals from the raw timing chart indicated in Fig's 14, 15 and 16.
Fig 19 is continued from Fig 18 to indicate the definite after removing the unnecessary signals from the raw timing chart indicated in Fig's 14, 15 and 16.
Fig 20 illustrates a case where the response of the logical product operation defined in the present invention becomes "1".

Fig 21 illustrates a case where the response of the logical product operation defined in the present invention becomes "0".

Fig 22 illustrates a case where the response of the logical sum operation defined in the present invention becomes "1".

Fig 23 illustrates a case where the response of the logical sum operation defined in the present invention becomes "0".

Fig 24 illustrates the relation matrix and its associated information defined in the present invention.

Fig 25 illustrates the general view of the computer and the control object to execute the control devised in the present invention.

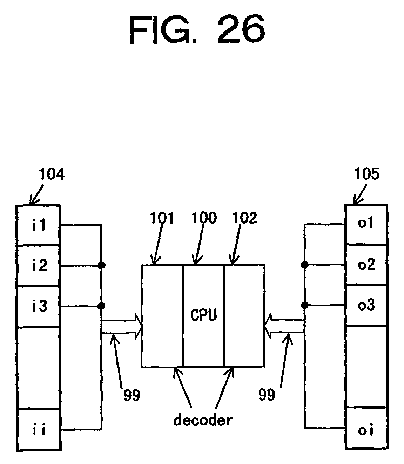

Fig 26 indicates the numbers of the input and output components to execute the control devised in the present invention.

Fig 27 illustrates the basic concept of the execution of the control system devised in the present invention.

Fig 28 illustrates the control data during the execution of the control system devised in the present invention.

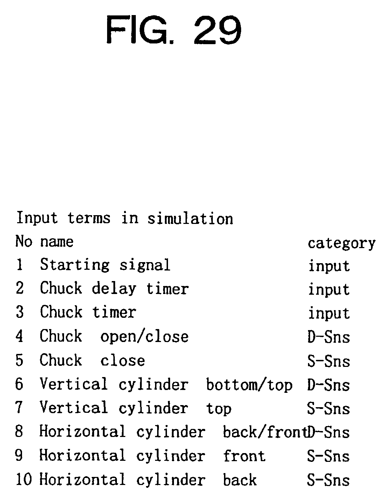

Fig 29 indicates a list input terms for an example of the simulation

Fig 30 indicates the states of the input and output terms at the start of an example of the simulation

Fig 31 indicates the states of the input and output terms at a certain time step point in an example of the simulation

Fig 32 indicates the action chart of a three-stage lift.

Fig 33 indicates the timing chart of a three-stage lift derived from the action chart indicated in Fig 32.

Fig 34 is continued from Fig 33 to indicate the timing chart of a three-stage lift derived from the action chart indicated in Fig 32.

Fig 35 indicates the action chart of a marine diesel engine to help explain the logic phase.

Fig 36 is continued from Fig 35 to indicate the action chart of a marine diesel engine to help explain the logic phase.

Fig 37 shows the simulation tables for sequence and logic modes separately.

Fig 38 illustrates the concept of the execution of the control in combination of the sequence and logic modes.

Fig 39 illustrates the general concept of the execution of the control by the present invention.

Fig 40 indicates the timing chart derived from a part of the action chart in Fig 35 to help explain the logic phase.

Fig 41 indicates the timing chart derived from a part of the action chart in Fig 36 to help explain the logic phase.

Fig 42 illustrates the relation vector of the option 1.

Fig 43 illustrates the relation vector of the option 2.

Fig 44 illustrates a case with of input signals of the combined logical sum.

Fig 45 illustrates the relation vectors for a combined logical sum condition.

Fig 46 indicates the schematic diagram of the equipment for the picking device.

Fig 47 indicates an example of the action chart of the picking device generally drawn for the conventional PLC.

Fig 48 indicates an example of a part of the ladder diagram for the picking device used for the conventional PLC.

Fig 49 indicates an example of the timing chart of the picking device generally drawn for the conventional PLC.

[BEST MODE FOR CARRYING OUT THE INVENTOIN]

Methods of a representative application of the present invention for the sequence control of the machinery and industrial process are explained below. Hereafter, the term programming-free logic controller is abbreviated as PFLC. The representative application process of PFLC consists of four parts of methods. The first part is a method to memorize the information of the action and timing charts as a set of vectors composed of the bits of the computer and to display the action and timing charts making use of the memorized bit information. The second part is a method to convert the action chart into the timing chart. The third part is a method to derive the relation vectors from the timing chart and the fourth a method to calculate the state of output signals using the relation matrix.

To start with, methods to memorize the information of the action and timing charts in a form of the bit series using the bits of the computer memory and to draw the charts starting from the memorized bit information are explained. The action chart indicates the action of the component equipment of the control object. In PFLC, actions of the equipment are indicated, in function of time on a chart to visibly clarify the movements of the components in relation to others. The components listed below are indicated:

as input equipment ; equipment for maneuvering such as switches, maneuvering lever and so on as output equipment; controlled equipment and actuators as signal information; parameters required by the integrated functions for the execution of the control are indicated on the action chart in the same way as the equipment to clarify the timing of action and effect in the control.

Examples of this kind of information are timing data of counter or timer to define the start of counting or analog signals, speed, pressure, temperature to show how these movement affects the progress of the control.

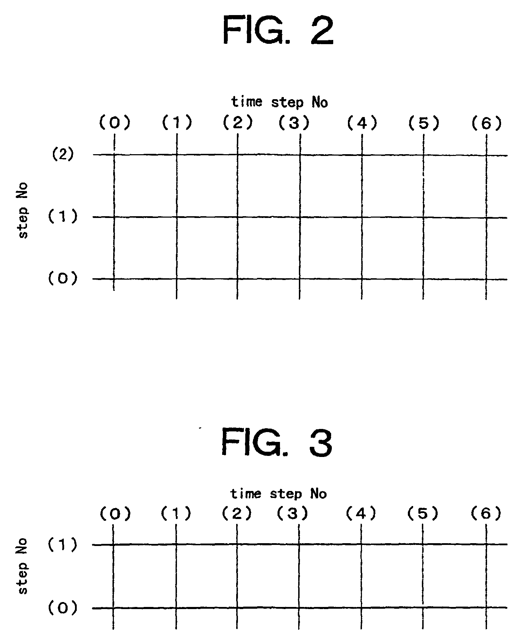

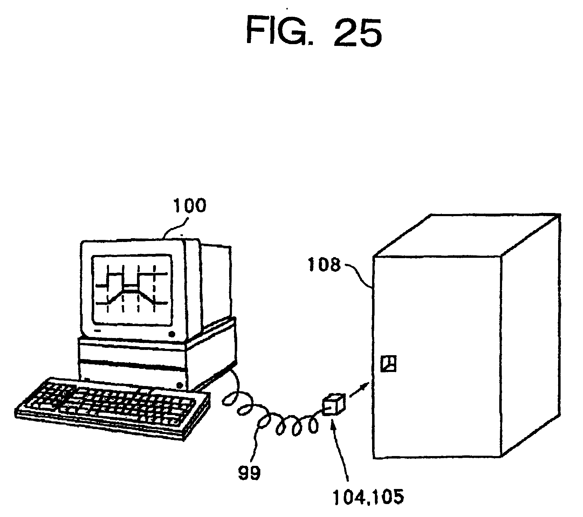

The method to express the action and timing charts with bit-series is explained below referring to Fig's 2 to 25. Each equipment or signal on the action chart is called a data unit. The action or the state of the signal of each data unit is indicated diagramatically on the display of the computer 100 in Fig 25. The horizontal axis of the action chart is graduated by the time step number as an index of the control step. The time step numbers are defined 0 at the initial condition and increased by one as the progress of the control as in Fig 2 and so on. The vertical axis of the action chart represents the movement of the equipment or the signal level. The coordinate is graduated by the stage number, which is categorized to single stage and multiple stages as in Fig 2 and 3. The multiple stage is used for such cases as to indicate the movement of the lift as shown in the example of Fig 2 to visualize where the lift is at each time step point.

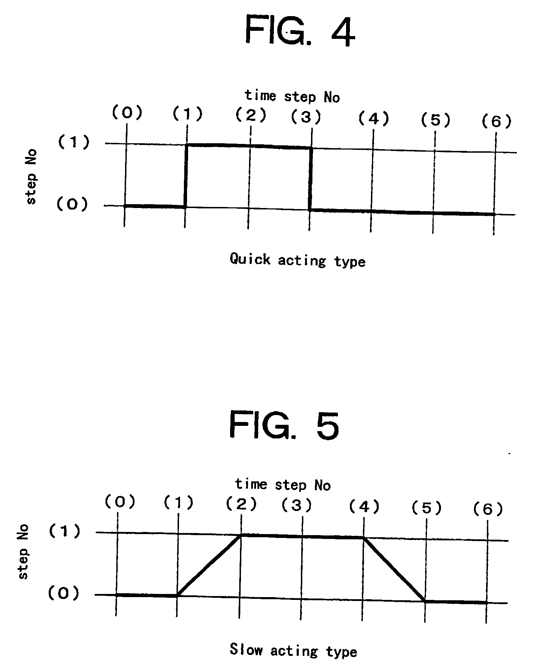

The single stage to indicate the signal level ON/OFF shares the majority of the cases in the action chart. Types of the equipment and signal are categorized into two. The first indicated in Fig 4 is defined as the Quick Acting type of which state changes quickly from the original state to the next one, while the second one, indicated in Fig 5, as the Slow Acting type of which state changes slowly. The criterion of the difference between quick and slow change is whether the state changes instantly or within one time step width. The electric signal is categorized to Quick Acting while the actuator to lift goods is categorized to Slow Acting.

To process the state of each data unit at each time step point in the computer 100, the state of each stage at each time step point shown in Fig 4 and 5 is expressed by bit 1 or 0 and stored as a state vector for each stage.

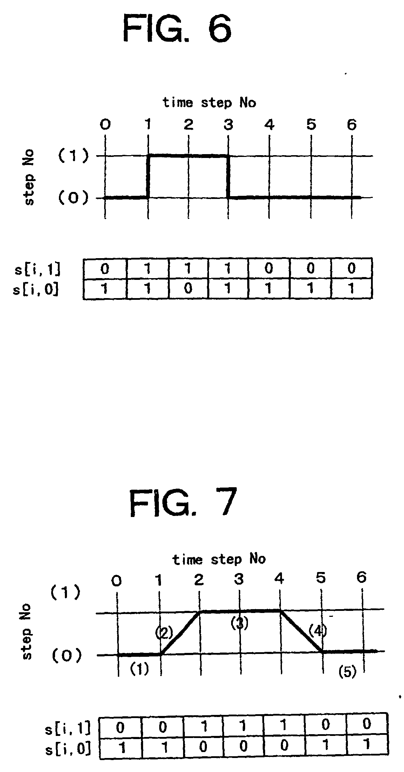

When the state vector of each stage of the i-th data unit is obtained, the vector component for the j-th stage is denoted by s[ i, j]. The state vector s[ i, j] is a bit-series of which bit number corresponds to a time step point number. In case the length of the state vector is larger than that of the bit length of one word of the computer, plural number of words is assigned to a state vector. The state vectors corresponding to the action charts in Fig 4 and 5 are indicated in Fig 6 and 7 respectively. As self-evident in these Fig's, the level of the bit of the state vector s[ i, j] at the time step point t is 1 if the state of the data unit is at the level of the j-th stage while it is 0 when the state is not on the level of the j-th level.

The state of the j-th stage of the i-th data unit at the time step point t is denoted by s[ i, j](t). To facilitate the exchange of the information between the two kinds of diagram, action and timing charts, and the state vector s[i, j], the coordinate point y(i, j) is defined to represent the vertical position of the state of the j-th stage of the i-th data unit on the indicated chart. Based on the definition of the state vectors, the action chart of the i-th data unit can be drawn on the computer display by the information obtained by tracing the trajectory of the mouse movement on the display. When a cross point of the time step point t1 and the j1-th stage is clicked and dragged to the cross point of the time step point t2 and the j2-th stage, the cross points are recognized to be the points (t1, j1) and (t2,j2).

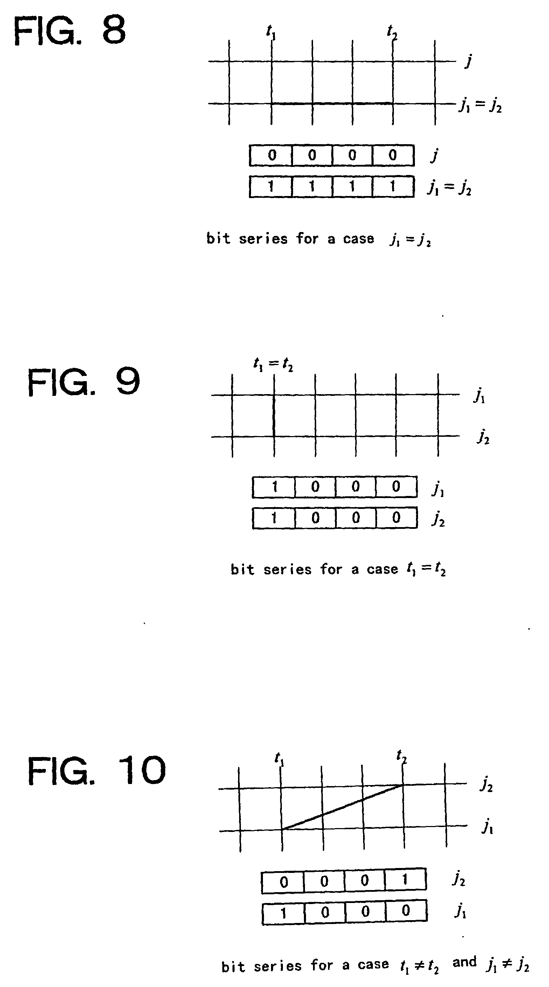

A partial bit-series of the state vector s[i,j] is created corresponding to the path the mouse has traveled. Fig 8 shows the example of the partial bit-series created when the mouse traveled along a stage horizontally, while Fig 9 shows the example of that created when the mouse traveled along a time step level vertically. In both cases, the bits corresponding to the lattice points where the mouse has passed becomes 1. In case where the mouse traveled obliquely passing through the lattice points only at the starting and terminating points, the bits corresponding to both extremities are expressed with 1.

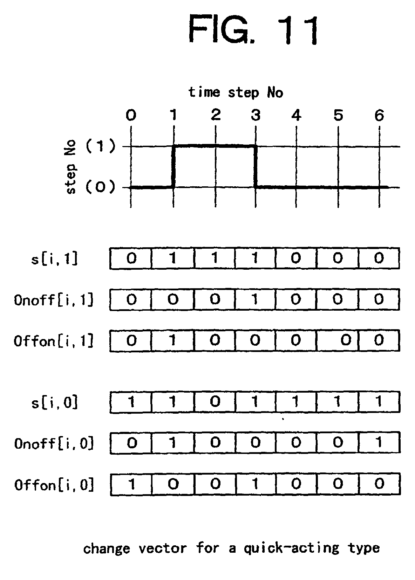

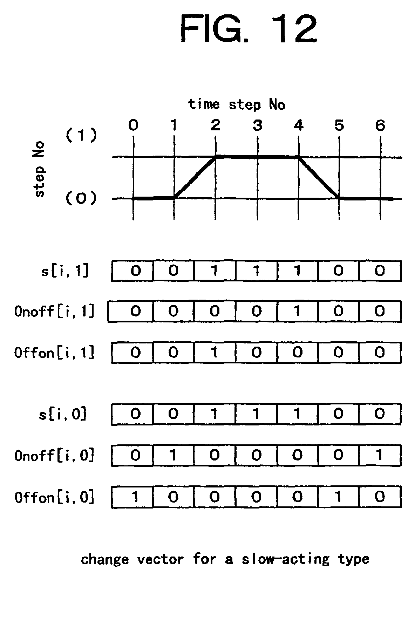

On the contrary, the action chart can be drawn using the information of the state vector s[i,j], by connecting the points where the bits of the state vector change by help of the state change vectors to detect the change of states. Examples of the bit-series derived from Fig 6 and 7 are shown if Fig 11 and 12 respectively. The heavy lines on Fig 4 and following Fig's indicate that the state of the corresponding stage is ON. The state change vector is defined in two ways. The first one is the downward change vector, Onoff[i, j] where the state of the j-th stage level switches from ON to OFF at the i-th time step point, while the second one is the upward change vector, Offon[i,j] where the the state of the j-th stage level switches from OFF to ON at the i-th time step point. In Fig 11, the 0-th and 1-st time points of the 0-th stage are connected since Offon[0,1]=1 and Onoff[0,1]=1. Then the line is extended to the stage 1 at the time point 1 since Offon[1,1]=1. Thereafter searching the nearest point of the vector Onoff[i,j], the line is extended to the searched point. As a general rule, the action chart is drawn by repeating connection of the point where the bit of the upward change vector is unity, Offon[i,j]=1, and the nearest point where the bit of the downward vector is unity, Onoff[i,j]=1, alternatively.

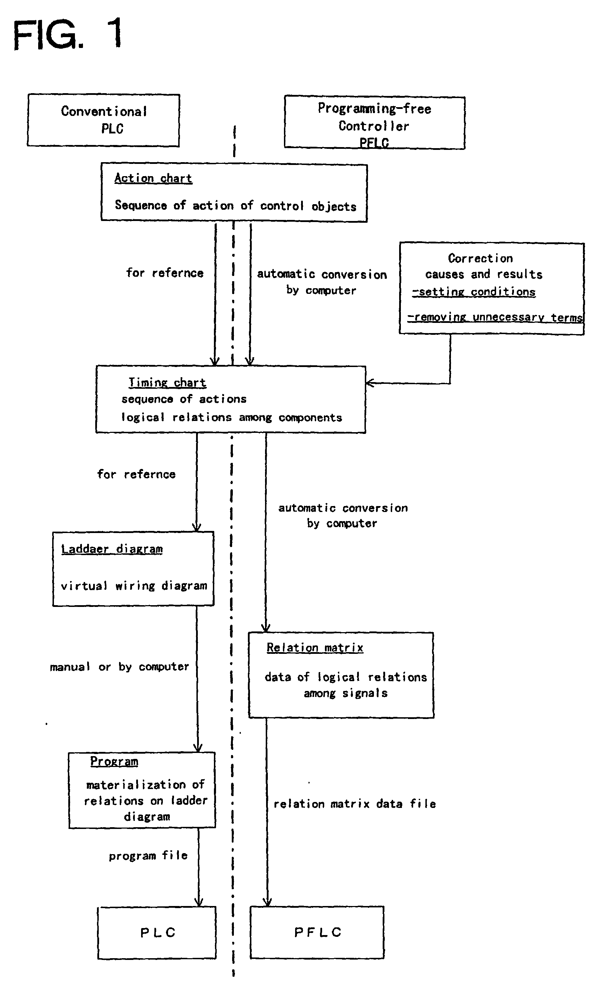

The process to supply necessary data for execution of the sequence control to the computer, the steps from S1 to S4 by PFLC, is shown in Fig 1 comparing with that by PLC. As the first step, the information of the action chart is put into the computer. This is done either by drawing on the computer display by operating the mouse as explained above or by conversion of the image information of the action chart on a paper. The process is explained based on an example of the simple control object shown in Fig's 46 and 47.

As a start, the information of the action chart is put into the computer in the step S1. The timing chart can be derived from the action chart in PFLC , whereas the latter is only for reference in PLC. The necessary information for the action chart of a unit is the change of the action in function of time and its logical relation with the action of other unit. The necessary input information is as categorized below: actuators of the control object:

in case of the example,

> chuck,
> vertical cylinder and
> horizontal cylinder,

external input signals: mainly manual input signals for operation and control.

> in case of the example
> starting signal,

external output signals: signals such as indicator or alarming signals issued depending on the progress of the control. In case of the example, no external output signals are included. auxiliary information: necessary information for control generated in the computer as an output of the integrated functions. In case of the example, the timer belongs to this category.

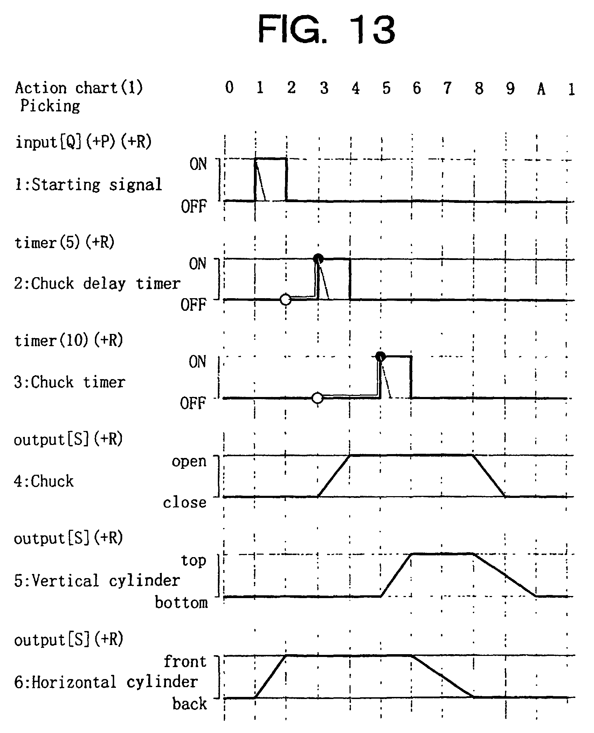

Comparing the action charts Fig.'s 47 and 13, more information is included in Fig 13. In Fig13, the starting signal as an external input signal, and the chuck delaying timer and the chuck timer are added as auxiliary information.

The information of timer and counter is included in Fig 13 for the clarification of the timing of the action of the timers.

Symbols in parentheses and brackets in Fig 13 stand for the followings according to the definition so far described: Symbols in the brackets stand for the categorized response speed of the input and output signals, [Q] for Quick acting and [S] for Slow acting respectively. The symbol P in the parenthesis stands for pulsed or time-differentiated signal, where (+P) for generating pulse when the state of the signal is switched on, while (-P) the case of switched off and double-signed P for the case both switched on and off. The symbol R in the parenthesis indicates how the change of the state of the input signal affects the change of the state of the output signal. Plus sign indicates that the state of the output signal changes when the state of the input signal is switched on, while the minus sign the change at switched off and double-sign for both changes.

Since the cause and result of a state change is logically judged and defined by the converting software during the process of converting the action chart to the timing chart, the indication on the action chart is for reference but not necessary information.

In the forthcoming step S2, the action chart is converted to the timing chart, where the signals theoretically necessary for execution of the control are derived and the bit-series to describe the state of the signals are composed. The timing charts shown in Fig's 14, 15 and 16 are derived from the action chart Fig 13 in the computer following the rules described above. The definite timing chart is derived after modifying it manually according to the engineer's judgement. The modification of the timing chart means the removal of the signals logically necessary but practically not necessary, for example some sensors or actuators, since the automatically derived timing chart includes all the theoretically necessary signals.

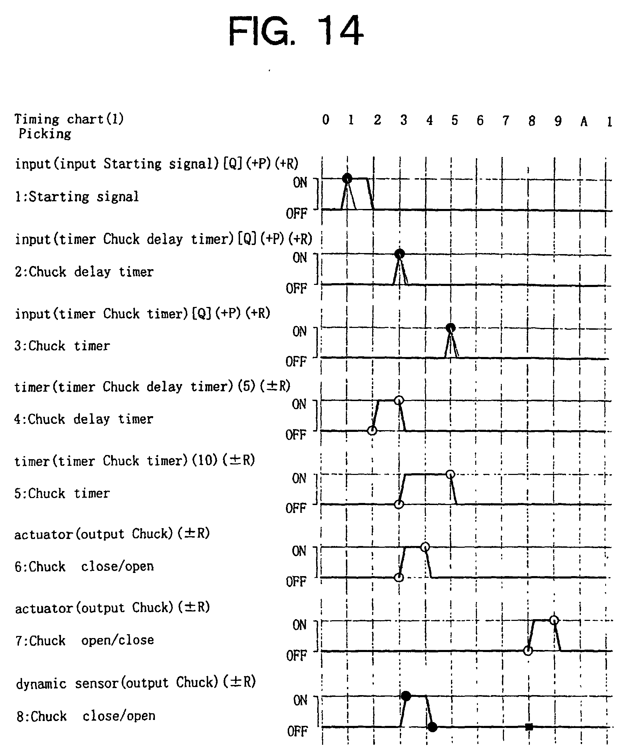

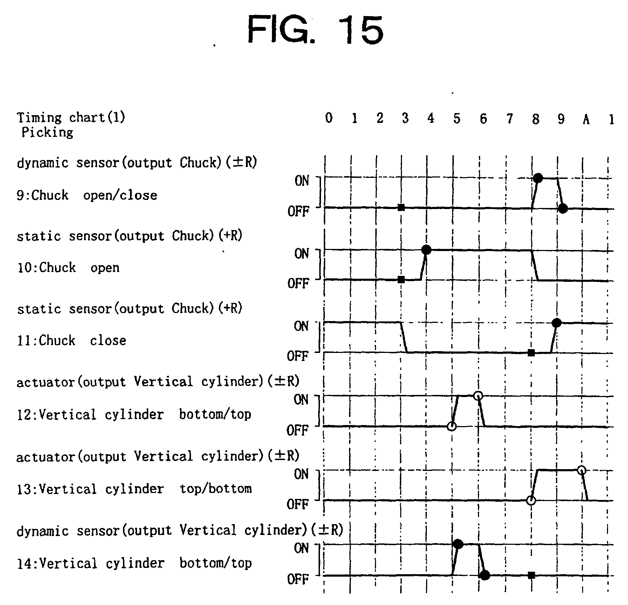

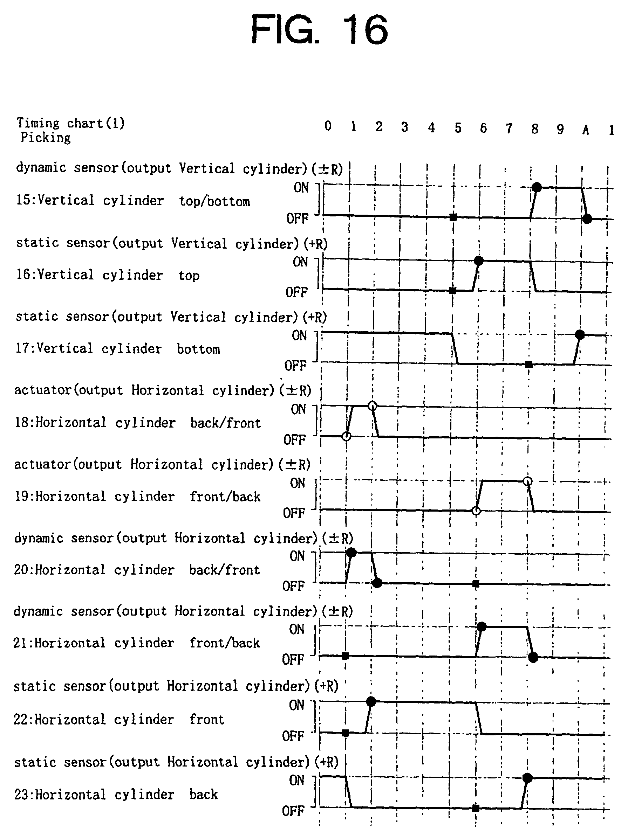

Comparing the action chart Fig 13 and derived timing chart Fig 14-16, the total number of input and output signals is increased to 23 in the timing chart as against 6 in the action chart. This is because the sensors and actuators are derived for the slow acting output equipment. For example, from the chuck (3) in the action chart Fig 13, signals derived in the timing chart are actuator for opening(2), actuator for closing (3), dynamic sensor to detect the opening action (8), the dynamic sensor to detect the closing action (9), the static sensor to detect the closed position (14) and the static sensor to detect the open position (19).

The derived timing chart consists of 15-input and 8-output signals, including the input signals switch(1), dynamic sensors(8)-(13), static sensors(14)-(19) and timer(21) and (23), while the output signals actuator(2)-(7) and timer(20) and (22).

The definite timing chart is finalized by removing signals theoretically derived but practically not needed. For example, in a case where some power source is necessary for closing the chuck but no external power source is needed for opening as a spring is incorporated, the actuator for opening (8) can be removed from the timing chart. Furthermore, if it is not necessary to know whether the actuator is in action, the dynamic sensors (14) and (15) can be removed. This rule is applicable also to the static sensors (14) and (15). This removal of the practically not needed signals must be done manually judging the peculiarity of each particular control project.

The procedure to derive the timing chart is explained in more detail. The derivation is carried out according to the conversion rules established for each type of the input and output signals to derive the state vectors on the timing chart from those on the action chart. The conversion rules are incorporated in the computer as integrated functions, among which adequate one is selected depending on the type of signals to be converted. The conversion rule for the quick acting signal is simply the copy of the state vector on the action chart.

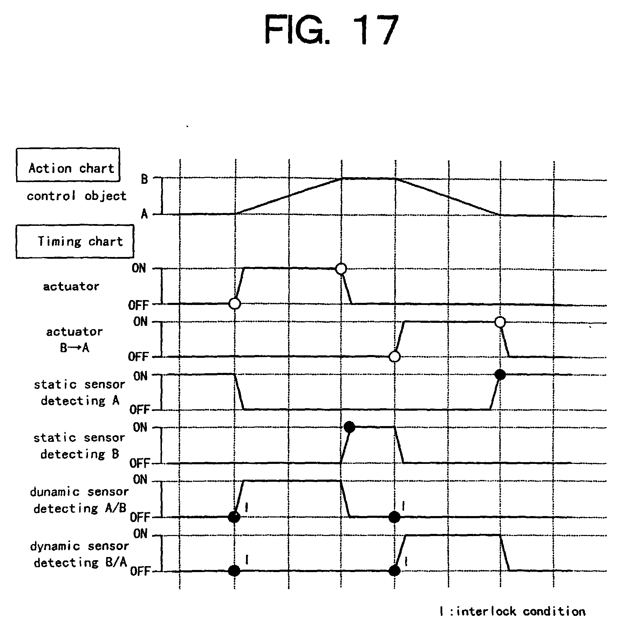

As the conversion rule for the slow acting signal is a little complicated, explanation is described based on an example of a chart of the slow acting signal shown in Fig 17. When the control object in Fig 17 moves between the two states A and B, signals logically necessary to realize the action on the action chart are derived and timing chart is derived from the logical relation among the derived signals. To start with, logically necessary signals for the action shown in Fig 17 are as below:

Actuators ( output signal)

Actuator to shift the state from A to B and
Actuator to shift the state from B to A.

Static Sensors(input signal)

Sensor to detect the control object stays at the state A and
Sensor to detect the control object stays at the state B.

Dynamic sensors (input signal)

Sensor to detect the control object is on way of shifting its state from A to B and
Sensor to detect the control object is on way of shifting its state from B to A.

The integrated function of the converting software from the action chart into the timing chart makes use of the relationship between the action of the control object and the signals on the timing chart as shown in Fig 17 to derive the bit series on the timing chart.

Here, the actuators and the static sensors are actual signals, while the dynamic sensors are virtual ones. Since the state of the dynamic sensor is just the same as that of the actuator, it can be used as an input signal for interlocking or for other condition factor to represent the state of the actuator.

The signal to trigger the change the state of the actuator is given by sources not indicated in Fig 17 and the signals from the sensors are issued to equipment also not indicated in Fig17. The signals derived from the control object have logically possible relationship with each other, which takes role of the logical condition to be satisfied for the change of the state of the actuator when a trigger signal is given, as follows:

1) as the condition to turn off the state of the actuator from A to B,

state of the static sensor B must be ON.

2) as the condition to turn off the actuator from A to B,

state of the static sensor A must be OFF and

3) as an interlocking condition to turn on the state of the actuator from A to B,

state of the dynamic sensor from B to A must be OFF.

The above-mentioned three conditions are theoretically possible but could be eventually omitted according to the practical aspect of each control project. Based on the above three conditions, the rule to derive the logically necessary signals and their mutual logical relationship regarding the slow acting equipment is established. As mentioned before, practically unnecessary signal and relationship can be eliminated. The signals and logical relationship regarding the slow acting input equipment can be derived in a similar way except that the actuator is not included.

The timing chart derived by the above-mentioned method from the action chart Fig 13 are shown in Fig's 18 and 19. Comparing the sets of timing charts Fig's 14-15 and Fig's Comparing the two timing charts sets, Fig 14 to 16 and fig 18 to 19, a number of signals in the former set, terms with cross mark, are not found in the latter. This difference comes from the difference of the theoretical and practical control systems. For example, in Fig's 18/19, the chuck closes when the solenoid, or the actuator to close the chuck, turns ON, while it opens when the solenoid turns ON. Therefore, the actuator to close chuck (3) and the dynamic sensor to detect opening (9) are not structurally necessary in Fig's 18/19. After removing the cross-marked unnecessary signals in Fig's 14/15 in the similar way, the set of timing charts Fig's 18/19 is obtained. Following signals are removed from the Fig's 14/16 according to the practical structure of the control project:

actuator to open the chuck (3)

actuator for vertical picking (5)

dynamic sensor to detect chuck opening (9)

dynamic sensor to detect movement of the vertical picking cylinder (11)

dynamic sensor to detect movement of the axial picking cylinder (13)

static sensor to detect the chuck opening(14) and

static sensor to detect the lower position of the vertical picking cylinder (16).

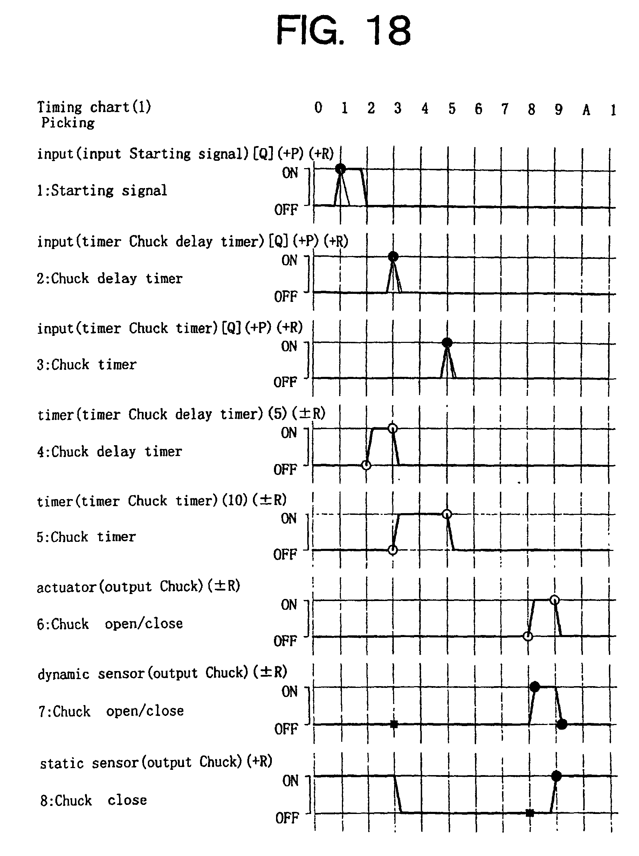

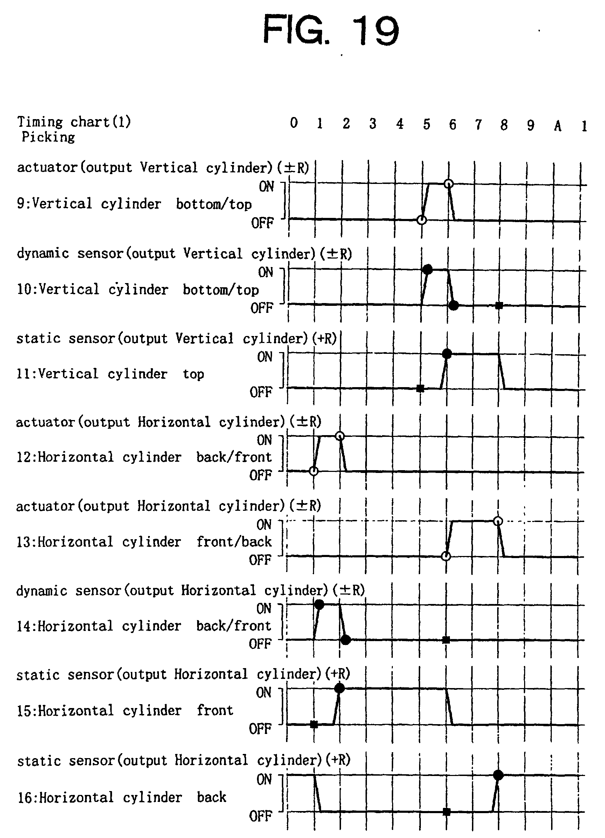

Since no redundant relationship, or data unit without representing the cause with solid mark or the result with blank mark, is found in Fig 18 and 19, the Fig's 18/19 are defined to be the definite timing charts for practical use. The definite timing chart forms a 10-input and 6-output system consisting of input signals, the switch (1), the dynamic sensors (6)-(8), The static sensor (9)-(12) and the timer (13) and (15), and output signals, the actuators (2)-(5) and the timer (14) and (15). The input and output signals necessary for execution of the control of the present control project is as listed below:

Input signals;

starting signal (1)

dynamic sensor to detect opening of the chuck (6)

dynamic sensor to detect movement of vertical cylinder(7)

dynamic sensor to detect movement of horizontal cylinder (8)

static sensor to detect closure of the chuck(9)

static sensor to detect upper position of the vertical cylinder( 10)

static sensor to detect back end of the horizontal cylinder (11)

static sensor to detect front end of the horizontal cylinder (12)

chuck-delaying timer(13)

chuck-timer(15)

output signals;

actuator to open the chuck(2),

upward actuator for vertical cylinder(3),

axial actuator for horizontal cylinder(4),

backward actuator for horizontal cylinder(5),

chuck-delaying timer(14) and

chuck-timer(15).

Here, the numbers in the parenthesis stand for data unit number indicated on the timing charts, Fig18 and 19.

In the forthcoming step 3, logical relationship is set up for the input and output signals on the definite timing chart, where the function is established describing the relationship of the change of the state of each output term at each time step point, in relation to the whole set of state of the input signals. The function representing the state of the i-th output signal y at j-th time step point t is expressed in a form of a state function of the set of the input signals x,

$$y_{t,j}=f(t,x).$$

Since the change of the state of the output signal at a time step point t is needed in the execution of the sequence control, it is not necessary to introduce the describing functions for all output signals at all time step point. It is enough to derive the describing functions for the output signal at the time step point when its state changes.

Referring to the timing chart Fig 18 and19, the describing functions listed below are necessary and sufficient for the execution of the control:

1:f(1,4) to turn on the forward actuator for horizontal cylinder(4) at time step 1,

2:f(2,4) to turn off the forward actuator for horizontal cylinder(4) at time step 2,

3:f(2,11) to turn on the chuck-delaying timer(11) at time step 2,

4:f(3,2) to turn on the actuator to open the chuck(2) at time step 3,

5:f(4,2) to turn on the actuator to open the chuck(2) at time step 4,

6:f(4,15) to turn on the chuck-timer(15) at time step 4,

7:f(5,3) to turn on the upward actuator for vertical cylinder(3) at time step 5,

8:f(6,3) to turn off the upward actuator for vertical cylinder(3) at time step 5,

9:f(6,5) to turn on the backward actuator for horizontal picking cylinder(5) at time step 6,

10:f(6,13) to turn off the chuck-delaying timer(13) at time step 6,

11:f(7,13) to turn off the chuck-delaying timer(13) at time step 7,

12:f(7,5) to turn off the backward actuator for horizontal cylinder(5) at time step 7,

13:f(7,15) to turn off the chuck-delaying timer(13) at time step 7.

The above-listed describing functions f(t,x) related to the time step points 1 to 7 and the state of the input signals are determined automatically and uniquely in the computer. The value of the describing function $y_{t,j}$=f(t,j) corresponding to a specific output at a specific time step point can be obtained through the calculation of the bit-series product formally defined as

$$y_{t,j}=\{m_j\}_t\{x_j\}_t \tag{1},$$

where,

$\{m_j\}_t$: relation vector describing the condition of the input signals to change the state of an output signal at the time step point t,

$\{x_j\}_t$: input vector describing the state of the input signals at the time step point t.

In the example of Fig's 18 and 19, the relation vector $\{m_j\}_t$ and the input vector $\{x_j\}_t$ are bit-series vector consisting of 10 bits and the system consists of 13 relation vectors.

The relation vector is defined as a bit-series to describe the necessary and sufficient condition of the state of the input signals to switch the state of an output signal. Its number of bits is equal to the number of input signals and the bit position of each input signal is arranged according to the input signal number, the i-th input signal is assigned at the i-th bit. The relation vector consists of two parts of bit-series, representing positive and negative parts. When the state of the j-th input is required to be 1 at a time step point, the j-th bit of the positive part of the relation vector is set 1 and the j-th bit of the negative part is set 0. On the contrary, when the state of the j-th input is required to be 0 at a time step point, the j-th bit of the positive part of the relation vector is set 0 and the j-th bit of the negative part is set 1. Furthermore, when the state of the j-th input has nothing to do with the change of the state of the output signal, the j-th bits of both positive and negative parts of the relation vector are set 0.

Looking at the time step point 1 of Fig's 18 and 19, the state of the output signal, the forward actuator for the horizontal cylinder (4), is turned on and the input signals, the starting signal (1) turned on, the static sensor to detect the back end of the horizontal cylinder (11) and the dynamic sensor to detect movement of horizontal cylinder (8) turned on under the condition static sensor to detect front end of the horizontal cylinder (12) stays off. Against the general rule that any change of the state of the output signal is caused by the change of the state of the input signals, an exceptional rule is added that the sensor signals can not be the cause of the change of state of the output signal derived from the same equipment as the input signals. Since the static sensor to detect back end of the horizontal cylinder (11) and the dynamic sensor to detect movement of horizontal cylinder (8) are derived from the same equipment as the forward actuator for horizontal cylinder (4), changes of state of these input signals are omitted from the cause of the state change of the output signal. The marks of these omitted changes are indicated by shifting them forward on the time step axis in Fig 18 and 19.

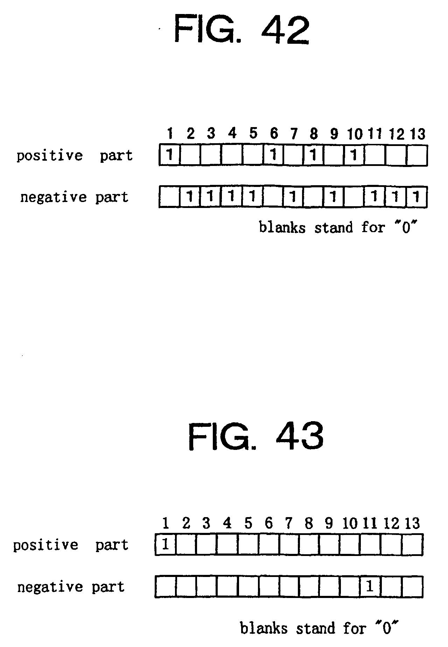

Applying this exceptional rule, only the turn-on of the starting signal (1) is the cause of the change of the state of the output signal. The resulting relation vector shown in Fig 43 tells that the required condition is $x_1$=1 for the input signal (1), $x_{11}$=0 for the input signal (11) and other signals can take either 1 or 0.

At the time step point 1 of Fig 18 and 19, the state of the output signal, the forward actuator for the horizontal cylinder (4), is turned on and the relation vector was derived as a necessary and sufficient condition for this change of the state. At the time step point 2, out of two changes of the state of the output signals, the relation vector is derived for the forward actuator for the horizontal cylinder (4) to switch the state from off to on. The attribute of the relation vector is introduced and defined to clarify whether the state of the output signal is turned ON or OFF when the condition required by the relation vector is satisfied. The attribute is defined 1 if the state of the output signal is switched ON when the condition required by the relation vector is satisfied as against 0 if switched OFF.

The logical type of the relation vector is introduced and defined. As a basis of the logical type, the concept of the equality of the j-th bits of the relation and input vectors is introduced as follows. The j-th bits are defined equal in case where bit of the input vector is 1 when the bit of the positive part of the relation vector is 1, or when the bit of the input vector is 0 when the bit of the negative part of the relation vector is 1, or when the bit of the input vector is either 1 or 0 when the bits of both parts of the relation vector is 0. All the relation vectors derived for the example of Fig 18 and 19 require all the bits of the input vector are equal to those of the relation vector according to the said definition. The relation vector of this type is defined as logical product type or AND-type. Most of the relation vectors derived from the timing charts are generally of simple AND-type. Meanwhile in a case where at least one bit is required to be equal to that of the relation vector, the relation vector is defined as logical sum type, or OR-type.

The result of the calculation given formally by the equation (1), $y_{t,j}$ is obtained applying a rule defined later for each logical type of the relation vector to the result of the response of the detailed calculation of the equation (1). The detailed calculation of the formal equation (1) consists of two parts, The first part is regarding the bit-wise logical product of the positive part of the relation vector $\{m_p\}$ and the input vector $\{x\}$, $\{P_p\}=\{m_p\}^*\{x\}$, while the second part is regarding the bit-wise logical product of the negative part of the relation vector $\{m_n\}$ and the inverse of the input vector $\{x\}$, $\{p_n\}=\{m_n\}^*-\{x\}$. Here, $-\{x\}$ stands for the inverse of the vector $\{x\}$. The rule to obtain the response z is as follows:

In case of logical product (AND-type);

Z=1; if $\{p_p\}=\{m_p\}$ and $\{p_n\}=\{m_n\}$
Z=0; for all cases except the above.

In case of logical sum (OR-type);

Z=0; if $\{p_p\}=0$ and $\{p_n\}=0$
Z=1; for all cases except the above.

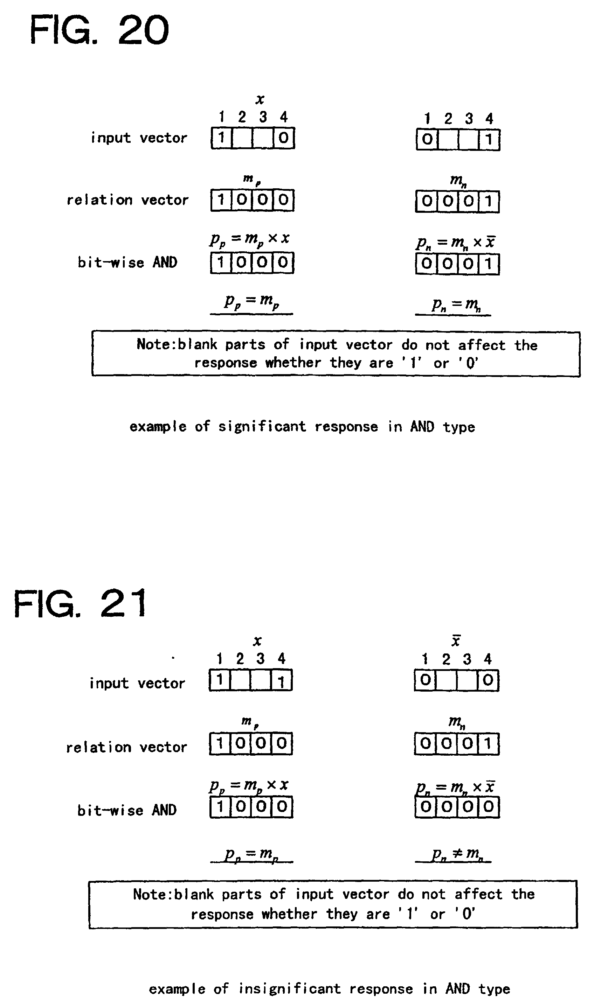

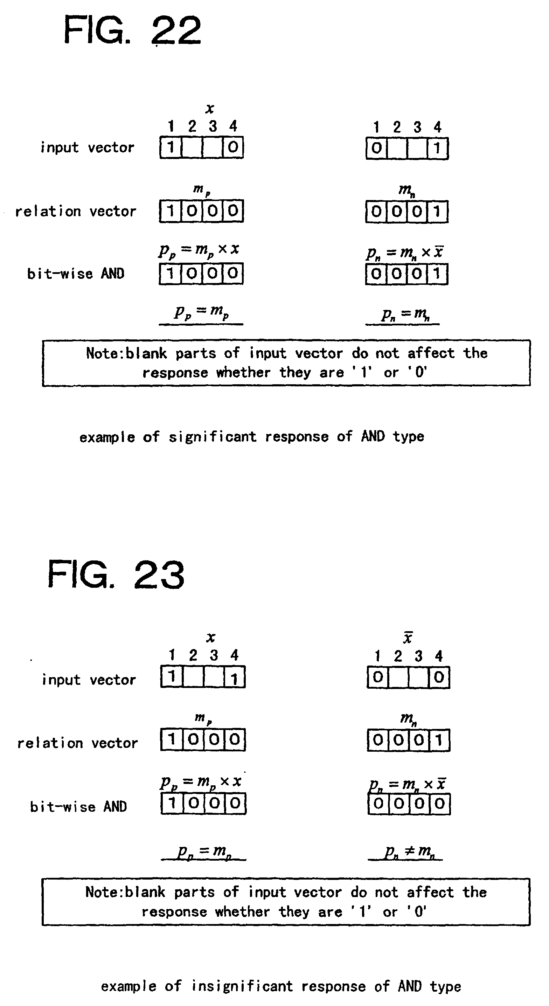

Examples of the results of the response calculation between a relation vector and the input vectors of different bit conditions for different logical types are shown in Fig's 20/23. The response 1 is obtained Fig 20 as against 0 in Fig 21 for the case of the AND-type, while the response 1 in Fig 22 as against 0 in Fig 23 for the case of the OR-type.

The signal level of the output signal $y_{t,j}$ is obtained through the rule depending on the attribute of the relation vector and the response z defined and tabulated below:

| Attribute | 0 | 0 | 1 | 1 |
|---|---|---|---|---|
| Response z | 0 | 1 | 0 | 1 |
| Level $y_{t,j}$ | reserved | 1 | reserved | 0 |

Here, "reserved" means the level $y_{t,j}$ is not changed. In other words, the level $y_{t,j}$ is equal to the attribute if the response is 1,while it does not change if the response is 0. The fact that the level $y_{t,j}$ is determined depending on the attribute and the response in stead of putting the calculated result straightly to the level of the output signal as in case of the Booolean algebra is one of the advantages of PFLC.

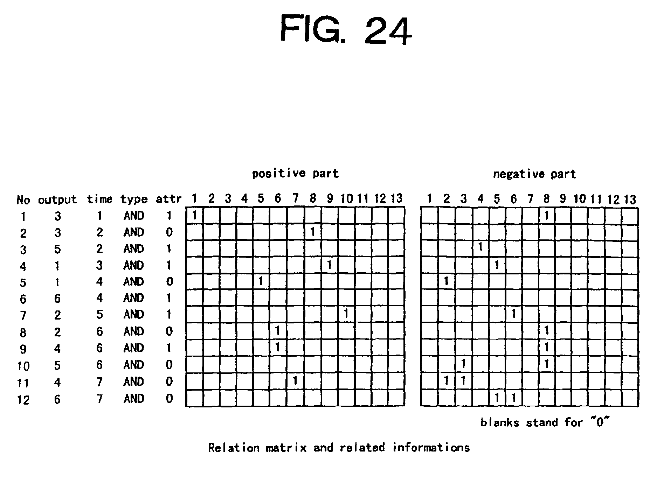

For the execution the control of a series of the relation vectors, the relation matrix is introduced. In Figs 18 and 19, 13 blank circles are found to indicate the change of the level of the output signals. The relation matrix is defined as a set of relation vectors arranged according to the time step number and the output signal number. The relation matrix derived from Fig 18 and 19 is shown in Fig 24 together with the associated control information, time step number, related output signal number, logical type and attribute. It is one of the features of the present invention to determine the state of the output signal at a time step point by calculation of the formally indicated equation (1) to the corresponding relation vector during execution of the control.

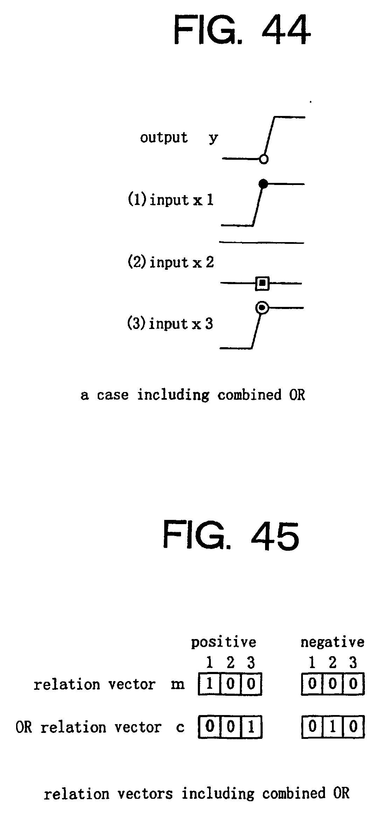

In the actual sequence control, various cases with combination of AND-type and OR-type can be included as an extension of the calculation for the basic AND-type and OR-type. Fig 44 shows an example of a case of the change of the state of an output signal y and the related change of state of three input signals together with the conditions they should satisfy. In the example, the output signal y is switched on if the input signal $x_1$ turns ON, and either the input signal $x_2$ is at the level OFF or the input signal $x_3$ turns ON. In the diagram Fig 44, the symbols of cause and condition for $x_2$ and $x_3$ are shown with solid dot at the center to indicate these two signals are a pair of OR.

The relation vector is established for input signals not included in the OR-pair and for those included separately. The vector m in Fig 45 is for the input signals out of the OR-pair while the vector C is for those in the OR-pair. The rule to obtain the state of the output signal for a given input vector is an extension of the rule explained before. That is, the responses $z_m$ and $z_c$ of the relation vectors m and C respectively are obtained according to the rule explained before. If $z_m=z_c=1$, the response is 1 and the state of the output signal can be obtained according to the attribute of the relation vector.

Since the steps up to deriving the relation matrix need conversation between man and machine, handle a volume of data for charts and so on and require a considerably large size of program for conversion of data, these steps had better be carried out with personal computer or work station containing rich user interface and large size, memory.

If the relation matrix obtained in the step 4 in Fig 1 is saved as a file and loaded in the computer 100 for execution of the control as shown in Fig 25, the computer for execution can be a small-sized one with minimum necessary functions since it shares only the calculation of the relation matrix. The computer used for the steps up to the step 4 is not exclusive for a particular control project but can be used for various control projects in common, while the one for execution of the control is exclusive for a particular project and set on site of the control. Therefore, if two computers are provided for preparation and execution, the latter can be of lower price and the total solution will be economical.

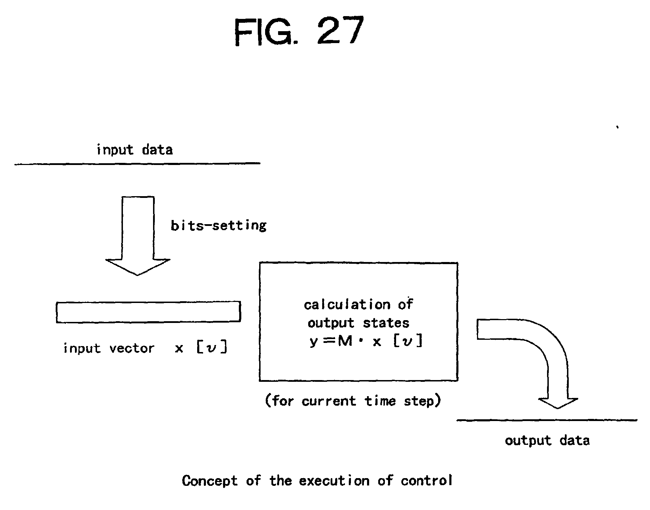

The general concept of the execution of the control is illustrated in Fig 27. The information of the relation matrix is given together with the information of the actually installed input and output equipment as listed in the tables 1 and 2.

Table 1

| The input equipment | | |
|---|---|---|
| Terminal No | name | category |
| 1 | starting signal | input signal |
| 5 | chuck closed position (9) | static sensor |
| 6 | upper position of vertical cylinder (10) | static sensor |
| 7 | back end of horizontal cylinder (11) | static sensor |
| 8 | front end of horizontal cylinder (12) | static sensor |

Table 2

| The output equipment | | |
|---|---|---|
| Terminal No | name | category |
| 1 | chuck closer (2) | actuator |
| 2 | vertical cylinder raiser (3) actuator. | |
| 3 | horizontal cylinder to front (4) actuator | |
| 4 | horizontal cylinder (5) actuator | |
| Note: Numbers in parentheses are the data unit numbers in Fig's 18/19. | | |

The input signals are supplied from the control object 108 to the computer 100 through the cable 99 and the connector 104. The output signals obtained as a result of the calculation of the relation matrix are sent to the control object through the cable 99 and the connector. The control is carried out automatically through this communication of the information between the control object and the computer. The general concept of the execution of control is as shown in Fig 27. The state of the set of the input signals at a time point is set in the memory of the computer 100 corresponding to the input vector x[s].

The state of the output signals in response to the given input state is calculated with the relation matrix by the equation formally expressed as;

$$Y=M*x[s] \qquad (2),$$

and the resulting state of the output signals y is issued to the control object. The equation (2) implies that the calculation with the relation matrix is carried out for the set of the state of the input signals at a time point by taking out a line of the matrix, a relation vector corresponding to the time point.

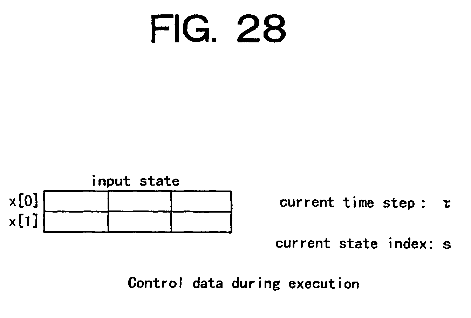

Here, the notation x[s] is for the efficiency of the calculation for execution of the control, in other words for minimizing the number of scanning. The control data for the calculation for execution is shown in Fig 28. Memories for two bit-series x[0] and x[1] are provided for storing the state of the input signals. As the progress of the control, the time step number on the timing chart also makes progress. Here, the index of the current state s is so defined that the value of s switches following the formula s=1-s at each transition of the time step. Then, if the value of s is set 0 at the start of the control, it switches between 0 and 1 alternatively at each time step.

The minimization of the calculation time during execution of the control is attained by the procedure described below making use of the above-mentioned index of the current state:

1) if the state index s=0 at a time point $\tau$, the input vector x(1-s)=x[1] is the input vector at the time step one step before $\tau$-1. Therefore, if the exclusive or of the two input vectors x[S]$\cap$x[1-s]=0 , the two are composed of the identical bit states, suggesting that the calculation for the output state not necessary since no change of the input state is brought from the last scanning.

2) on the contrary, if x[s]$\cap$x[1-s]>0 , suggests the state of at least one input signal has changed. In this case, the calculation is done using the relation vector of the line of time step equal $\tau$ in Fig 24. If the response is positive, the state of the output signal y is set after correction by the attribute.

3) after applying resetting formula s=1-s , go back to step 1).

This procedure attains minimization of the calculation of response and efficient execution of the control by limiting calculation only to the specific time step.

The sequence control is executed by the computer 100 connected to the control object 108 through the IO equipment. The program to calculate the relation matrix is installed in the computer, which is not exclusive for a particular control object or project but generalized for any object.

Therefore, as a principle, the manufacturer of PFLC supplies the program and the user just put input data into the computer to get the relation matrix without programming by himself. The relation matrix M derived for each particular control project is treated as the data to execute the control proper to the project. The computer gets the information of the input signals X, calculates the state of the output signals Y according to the calculation rule of the relation matrix formally expressed as Y=M*X and issues Y to the process. A computer with small capacity at low cost can be the computer for execution 100 since it only reads X, calculate the relation matrix and deliver Y. The calculation for the execution, the calculation of the relation matrix, consists of getting the state of the specific output signal $y_i$ through the formula $y_i = m_i * x$ , where $m_i$ is a relation vector corresponding to the output term $y_i$.

Since the relation vectors are arranged according to the time step number on the timing chart, the calculation for the execution can be done according to the order of the sequence if done one by one from the first line of the relation matrix. Furthermore, the calculation can be done only for the time step specified to each relation vector in stead of calculating for the whole set vectors as done in PLC. The state of the output signal can be "no change" in addition to either ON or OFF. The choice is automatically made according to the rule in function of the response of the calculation and the attribute of the relation vector.

Simulation on the computer display is easily done to confirm that the behavior of the output signals against the changed input signals is as intended. The number of input signals indicated on the display for the simulation is more than that of the actual control as shown in Fig28 since the virtual signals such as the dynamic sensors are indicated for simulation to confirm the state of these signals.

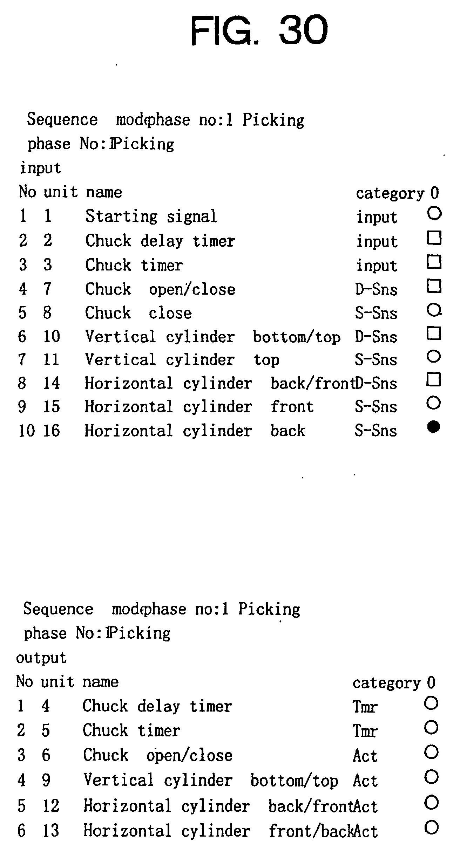

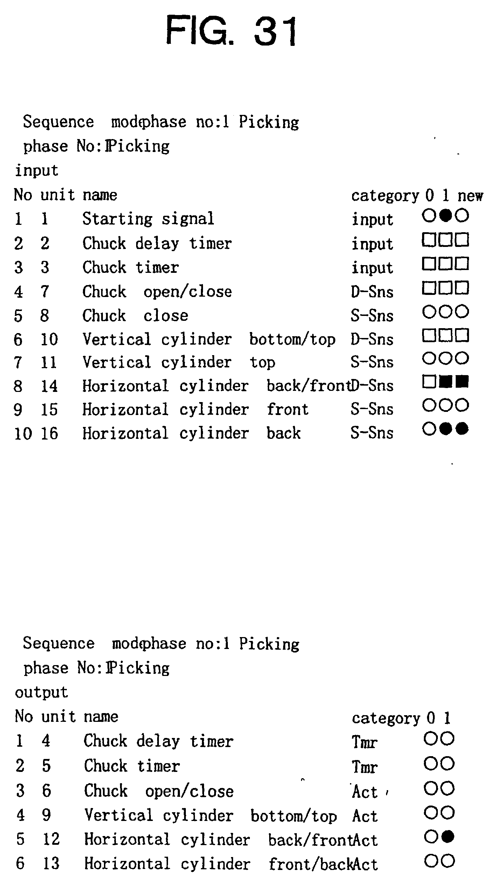

The simulation on the display is carried out by setting the state of the input signals, ON with solid circles while OFF with blank circles. Since the states of the virtual signals are automatically set by the program, one can not set it. In this sense, the state of them is indicated with solid and blank squares in Fig 30. The example on Fig 31 shows a case where the calculation for the time step point is over and ready for setting the state of the input signals for the next step on the column "new".

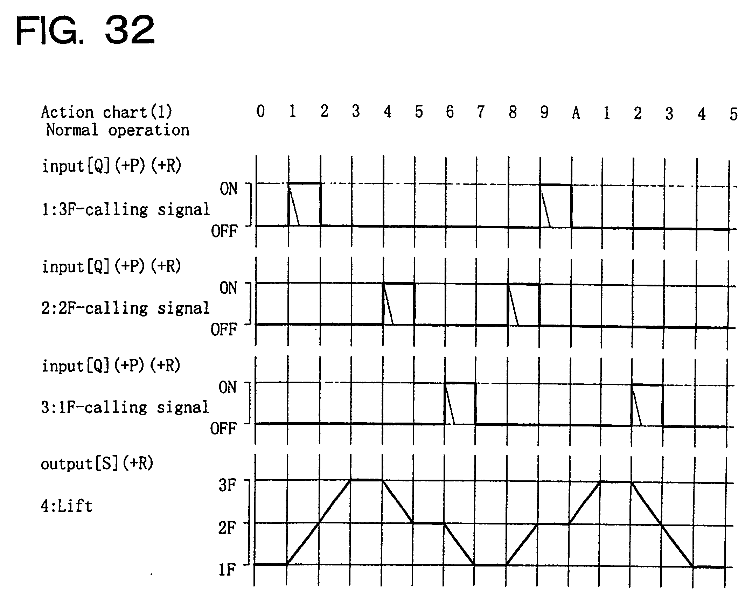

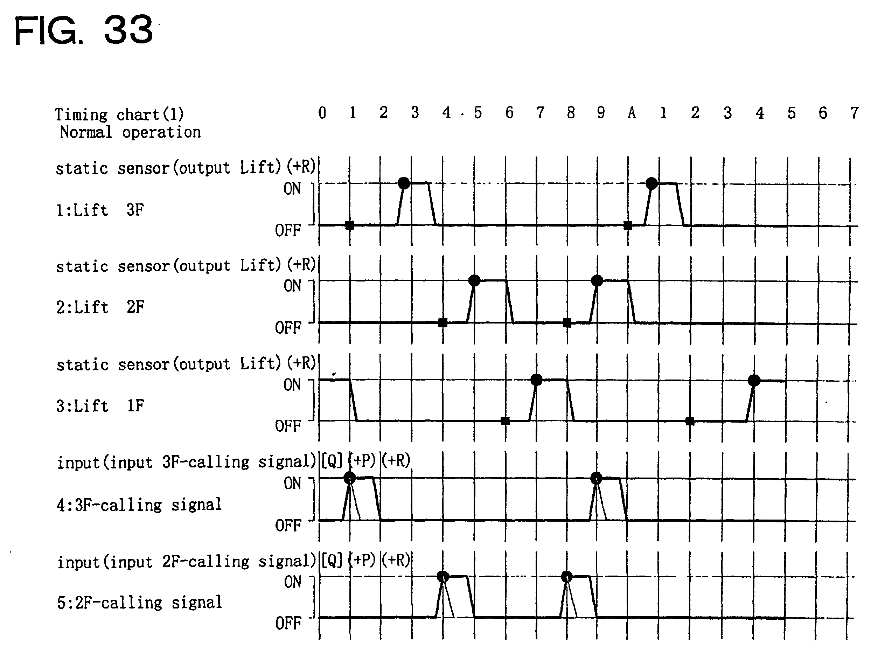

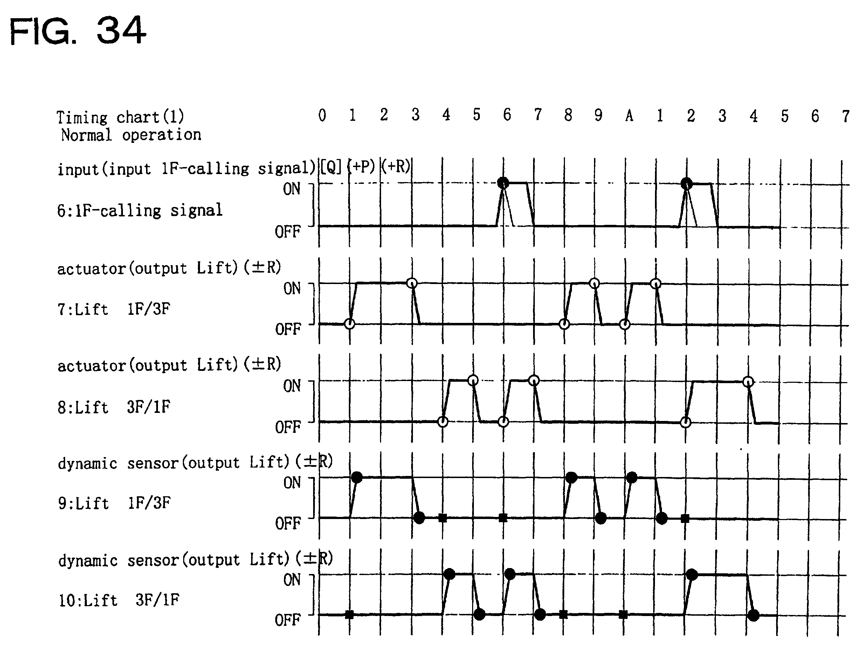

As an example of a case including the multistage slow acting output equipment shown in Fig 2, a simple case of the timing chart of a three-stage lift is shown in Fig 32-34. The action chart, Fig 32, is converted to the timing chart Fig's 33/34. The static sensors 8, 9 and 10 are derived for each stage of the lift while the dynamic sensors are for upward and downward movements. The relation matrix and the simulation are not described since there is nothing particular to this type of equipment.

Although the sequence control generally deals with the sequence of the action of the components of the control object and the logical relationship among components, all the actions are not necessarily dependent on both the sequence and logic, some of them are dependent only on the logical relationship and independent of the sequence.

The action chart, Fig's 35 and 36, shows an example of he sequence control of a marine diesel engine to help explain the sequence and logic. The chart shows a series of actions, staring, reversing from ahead to astern, reversing from astern to ahead and stopping.

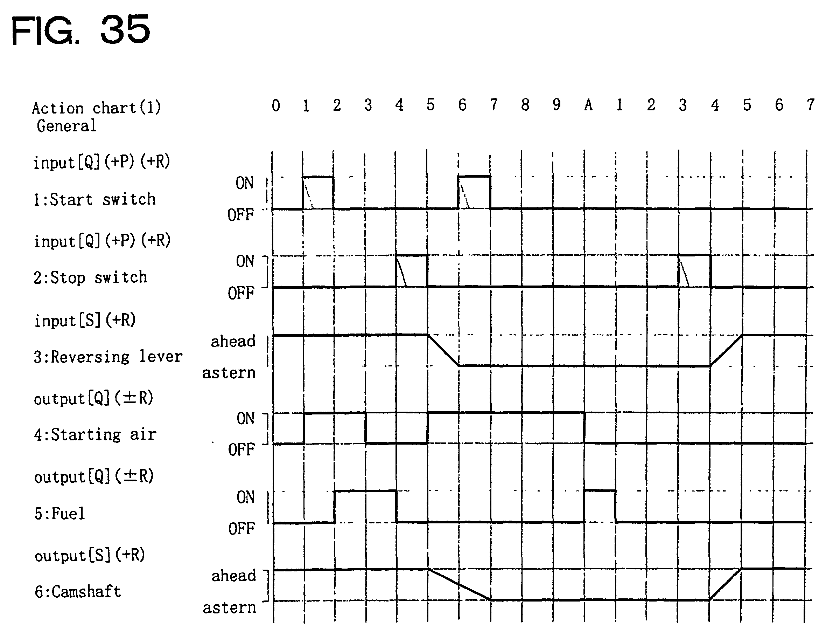

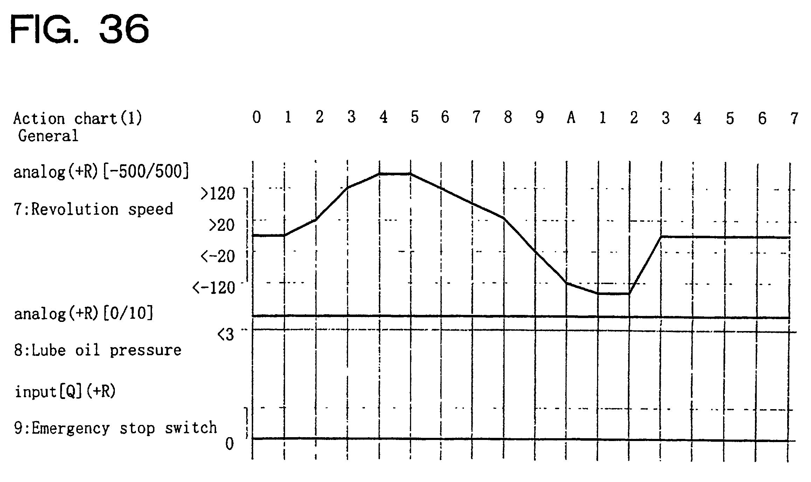

The maneuvering of the marine engine is not always done in the sequence shown in Fig 35 and 36, however, each unit operation, starting ahead, stopping and so on has own definite sequence and logic. For example, normal starting has the logical condition to be satisfied:

The emergency stop switch is OFF,
The lubricating oil pressure to be over the prescribed value and
The operating mode switch to be "normal" position, and the sequential and logical conditions:
To start fuel injection when the engine speed goes over 20 rpm,
To shut off the supply of the starting air when the engine speed goes over 120 rpm to establish the normal independent operation.

On the other hand, the emergency stop switch (8), lubricating oil pressure switch. (9) and the mode selector switch (11) are independent of the sequence. Acknowledging the difference of the sequence and logic, the logic mode is defined as a control mode governed only by the logic while the sequence mode as a control mode governed both by sequence and logic. The process described so far to derive the relation matrix starting from the action chart is in fact regarding the sequence mode.

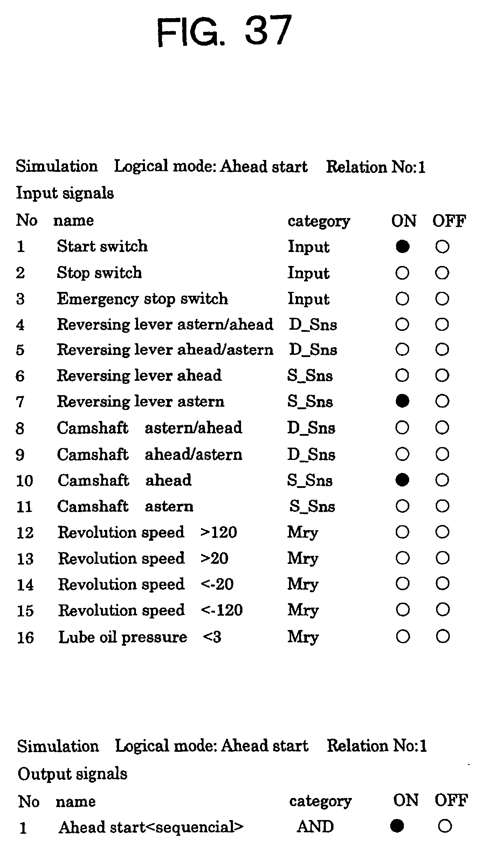

In parallel with the mode, a block of the control actions are defined as "phase", for example, the starting, the switching direction and the stopping are the starting phase etc in the example of the maneuvering of the marine diesel engine. A control project consists of plural number of phases of sequence mode. Since the logic mode is independent of sequence, the relation vectors for the logic mode are derived from the specified states of the input signals straightly without through the action chart as shown in Fig 37. The logic mode is also classified to phases.

In case of the emergency stop mentioned above as one of examples of the logic mode, if the emergency stop condition is satisfied, the fuel supply is shut down to stop the engine. In this case, the output term of the system, solenoid for fuel supply, is the output term of the relation vector. On the other hand, during normal operation, the normal operation is continued if the condition is satisfied, whereas the normal operation is stopped and the control for the current phase is interrupted. That is, the output term of the relation vector in this case is not the output term of the system but a phase of the sequence mode. To discriminate these two kinds of output, the formaer is deifined as "equipment-acting output", while the latter as "phase-selecting output".

The control actions of any practical control project consist of two parts, foreseeable actions and unforeseeable ones. The former is governed by the prescribed logic and sequence able to be controlled by the sequence mode while the latter is to dispose with the emergent case or some malfunction as a control action by the logic mode. Therefore, the combined mode paired with a sequence and logic modes is formed for the practical control. For each phase of the sequence mode, a phase of the logic mode is paired consisting of the relation vectors describing actions against conceivable emergent cases and malfunctions peculiar to the phase. As a special type of a combined phase including phase-selecting type logic mode, the combined phase is formed with the logic mode and a sequence mode of no-effect, so to speak an empty and dummy phase. Since a number of combinations of the sequence and logic mode is conceivable, the combined mode generally consists of plural number of phases.

To illustrate the above-mentioned phase and mode, a simplified example of maneuvering a marine diesel engine is explained. This control project consists of following sequence modes:

Ahead starting

inject the starting air
Start the fuel injection at the revolution speed over 20 rpm
Shut off the starting air supply at the speed over 120 rpm.

Astern starting

inject the starting air
Start the fuel injection at the revolution speed below -20 rpm
Shut off the starting air supply at the speed below -120 rpm.

Reversing to astern

inject the starting air at the speed below 120 rpm
Start the fuel injection at the revolution speed below -20 rpm and the camshaft is at the astern position
Shut off the starting air supply at the speed below -120 rpm.

Reversing to ahead

inject the starting air at the speed over -120 rpm

Start the fuel injection at the revolution speed over 20 rpm and the camshaft is at the ahead position
Shut off the starting air supply at the speed over 120 rpm.

Stopping

Shut off the starting air supply
Shut off the fuel injection.

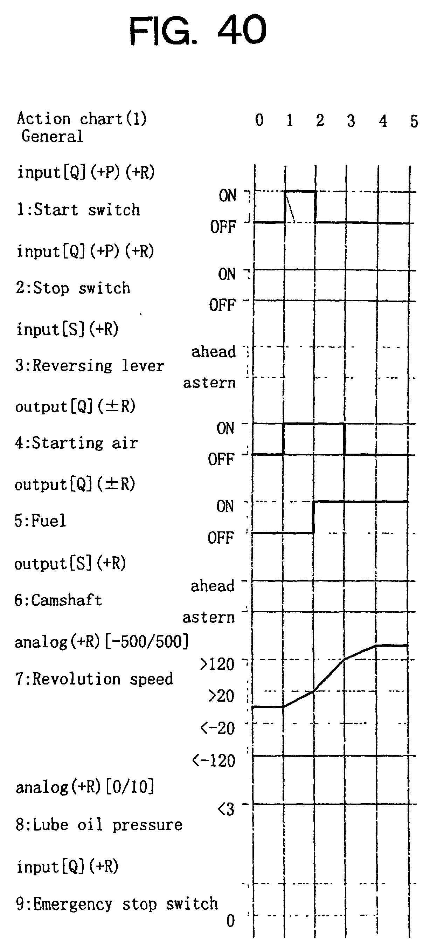

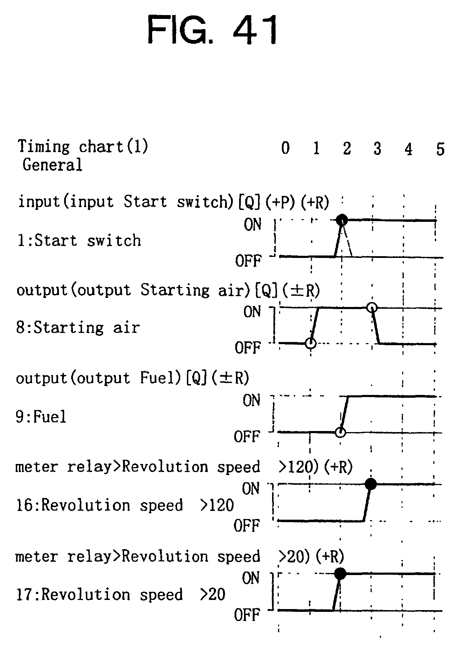

For the ahead starting of the engine shown in Fig's 35/36, the action chart is shown in Fig 40 and the timing chart in Fig 41. The input and output signals nothing to do with this phase are omitted in both diagrams.

The logical modes to be paired with the above-listed sequence modes are as follows:

Phase action logic condition

Normal operation AND emergency switch OFF

Lube oil pressure above prescribed

Emergency stopping

shut off fuel injection OR
emergency switch ON
Lube oil pressure below prescribed

Ahead starting choose phase AND selector switch on "ahead" side

Camshaft on ahead position
Starting switch ON

Astern starting choose phase AND selector switch on "astern" side

Camshaft on astern position
Starting switch ON

Reversing choose phase AND camshaft on neutral position

The example of the combined modes composed of the above-listed sequence and logic modes is as follows:

Combined mode sequence mode logic mode

| | | |
|---|---|---|
| Stand-by | nil | Emergency stopping |
| | | Ahead starting |
| | | Astern starting |
| | | Reversing |
| | | Stopping |
| Ahead starting | ahead starting | normal operation |
| Astern starting | astern starting | normal operation |
| Reversing | reversing | normal operation |

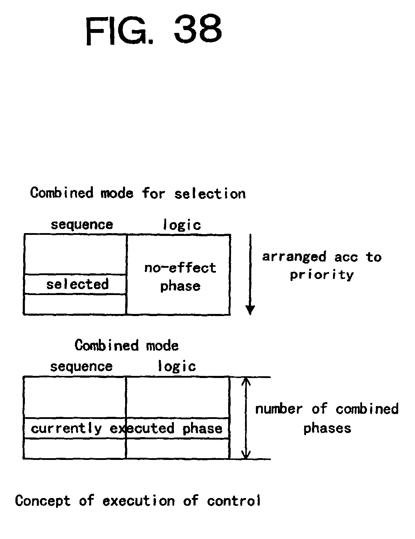

The concept of the choice of the combined mode during service is as illustrated in Fig 38. The table of array of the logic modes for choice of the combined mode is provided, where the combined modes are arranged according to the priority. While a certain combined mode is chosen and executed, the table is searched at each scan timing to see whether any phase of the priority higher than the currently executed one is required. If any phase of higher priority is searched the control is switched to the selected phase. If no other phase is chosen, the current phase is resumed at the current time step point. Furthermore, if no phase is chosen, no control is done.

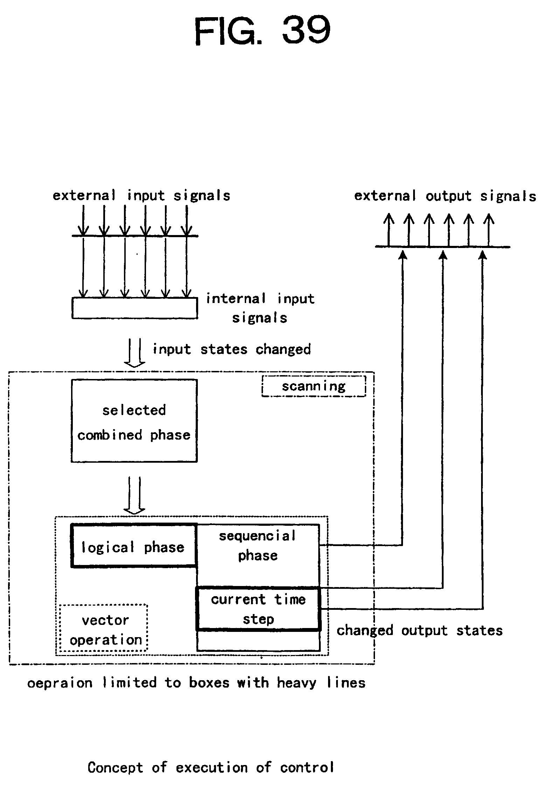

The general concept of the execution of PFLC is as illustrated in Fig 39. The state of the external input signals supplied to the memory of the computer at each scan timing is compared with the one at the previous scan timing. If no change is found between the two, no calculation is carried out to minimize the time for scanning. If any change is detected, a combined phase to be carried out is selected. If no phase is selected, no calculation is done. If a combined phase is selected, calculation is carried out to all the relation vectors of the logic mode and the specific vectors related to the current time step point of the sequence mode. By limiting the calculation of the relation vectors of the sequence mode to the specific ones, the scanning time is minimized. After all the calculation is over, he resultant state of the output signals is delivered to the control object and one cycle of the scanning is over.

As already mentioned, the sequence mode contains logical relations arranged according to the sequence expressed in the form of the relation matrix. Since each line of the relation matrix, relation vector, is a logical relation, it is possible to derive a relation vector from an IF-Then type flow chart describing the change of the state of an output signal resulting from the change of the state of the input signals.

[INDUSTRIAL APPLICABILITY]

PFLC by the present invention aims at attaining,

1) unified software by normalizing the procedure from the action or timing charts to the relation matrix,
2) clarification of the total flow of the control by basing on the action or timing chart,
3) minimization of the time for scanning by limiting the calculation for control only to the "present" by utilizing the relation matrix arranged in order of the sequence and
4) programming-free after manual input of the information of the input and output terms, intended actions of the actuators.

Based on the above-mentioned features, the total flow as well as the details of a sequence control becomes comprehensible to people not specialized in the control engineering.

Since the hardware of PFLC is an ordinary computer working with a computer program linked and compiled with a selected language like C,no time for interpretation of the program is needed during execution of the control leading to the reduced scanning time.

The data input process of PFLC starts with the analysis of the logical and sequential relationship of input and output signals. The relation vectors are derived by analysis of the logical relationships to describe the relationship of the states of the input and output signals. Then the relation matrix is derived, where the relation vectors are arranged according to the intended sequence of the control. The relation matrix is used as the data for a particular control project in PFLC.

The computer, the main part of the hardware of PFLC, is installed with a program to calculate the state of the output signals in response to the given states of the input signals referring to the relation matrix. The work to supply the relation matrix for each particular control project corresponds to the programming in PLC. Since the relation matrix in PFLC is automatically derived by the computer, programming for each particular control project as in case of PLC is not necessary in PFLC.

The execution of the control is based on calculating the state of the output signal for each relation vector, in other words for each row of the relation matrix, according to defined rule of calculation. Since the rows are sequentially arranged, the calculation can be limited to the necessary part judged by the progress of the control. This way of calculation results in calculation based not only on logical relationship but also on the sequential relationship allowing the calculation only for the "present".

During the process of converting the state lines of the action and timing charts to bit series, digital information of the charts are obtained. Furthermore, the state change vectors enable automatic drawing of the charts by connecting step level and time step points where the state of the signal changes.

Since the relation matrix describes the ON/OFF states of the input and output signals at plural number of time step points with bit series, the required capacity of the memory of the computer can be minimized.

Since the programs of PFLC can be written with such high-class language as C, an intelligent controller can be realized by integrating various functions for special control.

It is also possible to convert the programs with Neamonic instructions for PLC to the relation vectors for PFLC. By arranging the derived vectors according to the sequence referring to the timing chart of the PLC which does not include the sequential information, the resources of PLC can be utilized in PFLC.

**Claims**

1. A method of a sequence control, the sequence control including an input equipment, an output equipment which changes its state in response to the change of the state of signals outputted by the input equipment and actuators which change their states in response to the change of the state of signals outputted by the input equipment, and accomplishing an intended control action with the changed states of the actuators, which comprises:

   inputting the information of the state of the action of the input and output terms, corresponding to the input equipment, the output equipment and the actuators respectively, at each time step point representing the progress of the control into a computer,
   defining the state of each input and output term as 1 or 0 when its state is not at the reference state and defining the state as 0 or 1 when its state is at the reference state, and
   deriving and storing in the computer a relation vector which is a bit series describing the required state of the input terms to get the state of the output term to enable the intended control action.

2. A method of a sequence control, the sequence control including an input equipment, an output equipment which changes its state in response to the change of the state of signals outputted by the input equipment and actuators which change their states in response to the change of the state of signals outputted by the input equipment, and accomplishing an intended control action with the changed states of the actuators, which comprises:

   inputting the information of the state of the action of the input and output terms, corresponding to the input equipment, the output equipment and the actuators respectively, at each time step point representing the progress of the control into a computer,
   defining the state of each input and output term as 1 or 0 when its state is not at the reference state while defining the state as 0 or 1 when its state is at the reference state,
   deriving and storing in the computer a relation vector which is a bit series describing the required state of the input terms to get the state of the output term to enable the intended control action, and
   setting up a relation matrix in the computer by arranging the relation vectors in order of the time step point number so that the states of plural number of output terms are obtained according to the progress of the control.

3. A method of a sequence control, the sequence control including an input equipment, an output equipment which changes its state in response to the change of the state of signals outputted by the input equipment and actuators which change their states in response to the change of the state of signals outputted by the input equipment, and accomplishing an intended control action with the changed states of the actuators, which comprises:

   inputting the information of the state of the action of the input and output terms, corresponding to the input equipment, the output equipment and the actuators respectively, at each time step point representing the progress of the control into a computer,
   generating an input vector which is a bit series whose component bits are states of all the input terms at a time step point defining the state of each input and output term as 1 or 0 when its state is not at the reference state and defining the state as 0 or 1 when its state is at the reference state, and setting it in the computer memory.

4. A method of a sequence control, the sequence control including an input equipment, an output equipment which changes its state in response to the change of the state of signals outputted by the input equipment and actuators which change their states in response to the change of the state of signals outputted by the input equipment, and accomplishing an intended control action with the changed states of the actuators, which comprises:

   inputting the information of the state of the action of the input and output terms, corresponding to the input equipment, the output equipment and the actuators respectively, at each time step point representing the progress of the control into a computer,
   defining the state of each input and output term as 1 or 0 when its state is not at the reference state while defining the state as 0 or 1 when its state is at the reference state,
   deriving and storing in the computer a relation vector which is a bit series describing the required state of the input terms to get the state of the output term to realize the intended control action, and
   obtaining the state of the output term through a defined bit-wise operation between the input vector at a time step point and the relation vector corresponding to the same time step point.

**5.** A method of a sequence control, the sequence control including an input equipment, an output equipment which changes its state in response to the change of the state of signals outputted by the input equipment and actuators which change their states in response to the change of the state of signals outputted by the input equipment, and accomplishing an intended control action with the changed states of the actuators, which comprises:

inputting the information of the state of the action of the input and output terms, corresponding to the input equipment, the output equipment and the actuators respectively, at each time step point representing the progress of the control into a computer,

defining the state of each input and output term as 1 or 0 when its state is not at the reference state and defining the state as 0 or 1 when its state is at the reference state, and

setting up a coordinate system on the computer display consisting of a horizontal axis representing the time step point and a vertical axis with multiple stages to represent the state of the action of the input and output terms.

**6.** A method of a sequence control, the sequence control including an input equipment, an output equipment which changes its state in response to the change of the state of signals outputted by the input equipment and actuators which change their states in response to the change of the state of signals outputted by the input equipment, and accomplishing an intended control action with the changed states of the actuators, which comprises:

inputting the information of the state of the action of the input and output terms, corresponding to the input equipment, the output equipment and the actuators respectively, at each time step point representing the progress of the control into a computer,

defining the state of each input and output term as 1 or 0 when its state is not at the reference state while defining the state as 0 or 1 when its state is at the reference state,

drawing an action chart of each Input and output term on said coordinate system on the computer display illustrating the progress of the state by a horizontal line on a certain stage while the state keeps on a certain state and a straight line during transition of state connecting the point representing the starting stage level at the starting time step point and the completing stage level at the time step point of completing the transition,

deriving additional input and output equipment necessary for realizing the intended control action and their related input and output terms according to prescribed rule referring to the action chart, and

drawing the timing chart on the computer display by drawing the progress of the state of the derived input and output terms on the said coordinate system.

# FIG. 1

Conventional
PLC

Programming-free
Controller
PFLC

Action chart

Sequence of action of control objects

for refernce

automatic conversion
by computer

Correction
causes and results
-setting conditions

-removing unnecessary terms

Timing chart
sequence of actions
logical relations among components

for refernce

automatic conversion
by computer

Laddaer diagram

virtual wiring diagram

manual or by computer

Relation matrix

data of logical relations
among signals

Program

materialization of
relations on ladder
diagram

program file

relation matrix data file

PLC

PFLC

# FIG. 2

time step No

(0)　(1)　(2)　(3)　(4)　(5)　(6)

step No

(2)

(1)

(0)

# FIG. 3

time step No

(0)　(1)　(2)　(3)　(4)　(5)　(6)

step No

(1)

(0)

# FIG. 4

Quick acting type

# FIG. 5

Slow acting type

# FIG. 6

time step No

|       | 0 | 1 | 2 | 3 | 4 | 5 | 6 |
|-------|---|---|---|---|---|---|---|
| s[i,1] | 0 | 1 | 1 | 1 | 0 | 0 | 0 |
| s[i,0] | 1 | 1 | 0 | 1 | 1 | 1 | 1 |

# FIG. 7

time step No

|       | 0 | 1 | 2 | 3 | 4 | 5 | 6 |
|-------|---|---|---|---|---|---|---|
| s[i,1] | 0 | 0 | 1 | 1 | 1 | 0 | 0 |
| s[i,0] | 1 | 1 | 0 | 0 | 0 | 1 | 1 |

# FIG. 8

$t_1$     $t_2$

$j$

$j_1 = j_2$

| 0 | 0 | 0 | 0 | $j$ |
|---|---|---|---|---|

| 1 | 1 | 1 | 1 | $j_1 = j_2$ |
|---|---|---|---|---|

bit series for a case $j_1 = j_2$

# FIG. 9

$t_1 = t_2$

$j_1$

$j_2$

| 1 | 0 | 0 | 0 | $j_1$ |
|---|---|---|---|---|

| 1 | 0 | 0 | 0 | $j_2$ |
|---|---|---|---|---|

bit series for a case $t_1 = t_2$

# FIG. 10

$t_1$     $t_2$

$j_2$

$j_1$

| 0 | 0 | 0 | 1 | $j_2$ |
|---|---|---|---|---|

| 1 | 0 | 0 | 0 | $j_1$ |
|---|---|---|---|---|

bit series for a case $t_1 \neq t_2$ and $j_1 \neq j_2$

# FIG. 11

time step No

|     | 0 | 1 | 2 | 3 | 4 | 5 | 6 |

step No (1)

(0)

s[i,1]

| 0 | 1 | 1 | 1 | 0 | 0 | 0 |

Onoff[i,1]

| 0 | 0 | 0 | 1 | 0 | 0 | 0 |

Offon[i,1]

| 0 | 1 | 0 | 0 | 0 | 0 | 0 |

s[i,0]

| 1 | 1 | 0 | 1 | 1 | 1 | 1 |

Onoff[i,0]

| 0 | 1 | 0 | 0 | 0 | 0 | 1 |

Offon[i,0]

| 1 | 0 | 0 | 1 | 0 | 0 | 0 |

change vector for a quick-acting type

# FIG. 12

time step No

s[i, 1]

| 0 | 0 | 1 | 1 | 1 | 0 | 0 |
|---|---|---|---|---|---|---|

Onoff[i, 1]

| 0 | 0 | 0 | 0 | 1 | 0 | 0 |
|---|---|---|---|---|---|---|

Offon[i, 1]

| 0 | 0 | 1 | 0 | 0 | 0 | 0 |
|---|---|---|---|---|---|---|

s[i, 0]

| 0 | 0 | 1 | 1 | 1 | 0 | 0 |
|---|---|---|---|---|---|---|

Onoff[i, 0]

| 0 | 1 | 0 | 0 | 0 | 0 | 1 |
|---|---|---|---|---|---|---|

Offon[i, 0]

| 1 | 0 | 0 | 0 | 0 | 1 | 0 |
|---|---|---|---|---|---|---|

change vector for a slow-acting type

# FIG. 13

Action chart(1)
Picking

0  1  2  3  4  5  6  7  8  9  A  1

input[Q] (+P) (+R)

ON

1:Starting signal

OFF

timer(5) (+R)

ON

2:Chuck delay timer

OFF

timer(10) (+R)

ON

3:Chuck timer

OFF

output[S] (+R)

open

4:Chuck

close

output[S] (+R)

top

5:Vertical cylinder

bottom

output[S] (+R)

front

6:Horizontal cylinder

back

# FIG. 14

Timing chart(1)
Picking

| | 0 | 1 | 2 | 3 | 4 | 5 | 6 | 7 | 8 | 9 | A | 1 |
|---|---|---|---|---|---|---|---|---|---|---|---|---|

input(input Starting signal)[Q](+P)(+R)

1:Starting signal

input(timer Chuck delay timer)[Q](+P)(+R)

2:Chuck delay timer

input(timer Chuck timer)[Q](+P)(+R)

3:Chuck timer

timer(timer Chuck delay timer)(5)(±R)

4:Chuck delay timer

timer(timer Chuck timer)(10)(±R)

5:Chuck timer

actuator(output Chuck)(±R)

6:Chuck close/open

actuator(output Chuck)(±R)

7:Chuck open/close

dynamic sensor(output Chuck)(±R)

8:Chuck close/open

# FIG. 15

Timing chart(1)
Picking

| | 0 | 1 | 2 | 3 | 4 | 5 | 6 | 7 | 8 | 9 | A | 1 |

dynamic sensor(output Chuck)(±R)

9:Chuck open/close

static sensor(output Chuck)(+R)

10:Chuck open

static sensor(output Chuck)(+R)

11:Chuck close

actuator(output Vertical cylinder)(±R)

12:Vertical cylinder bottom/top

actuator(output Vertical cylinder)(±R)

13:Vertical cylinder top/bottom

dynamic sensor(output Vertical cylinder)(±R)

14:Vertical cylinder bottom/top

EP 1 077 396 A1

# FIG. 16

Timing chart(1)
Picking

0 1 2 3 4 5 6 7 8 9 A 1

dynamic sensor(output Vertical cylinder)(±R)

15:Vertical cylinder top/bottom

static sensor(output Vertical cylinder)(+R)

16:Vertical cylinder top

static sensor(output Vertical cylinder)(+R)

17:Vertical cylinder bottom

actuator(output Horizontal cylinder)(±R)

18:Horizontal cylinder back/front

actuator(output Horizontal cylinder)(±R)

19:Horizontal cylinder front/back

dynamic sensor(output Horizontal cylinder)(±R)

20:Horizontal cylinder back/front

dynamic sensor(output Horizontal cylinder)(±R)

21:Horizontal cylinder front/back

static sensor(output Horizontal cylinder)(+R)

22:Horizontal cylinder front

static sensor(output Horizontal cylinder)(+R)

23:Horizontal cylinder back

30

# FIG. 17

I : interlock condition

# FIG. 18

Timing chart(1)
Picking

# FIG. 19

Timing chart(1)
Picking

0  1  2  3  4  5  6  7  8  9  A  1

actuator(output Vertical cylinder)(±R)

9:Vertical cylinder  bottom/top

ON

OFF

dynamic sensor(output Vertical cylinder)(±R)

10:Vertical cylinder  bottom/top

ON

OFF

static sensor(output Vertical cylinder)(+R)

11:Vertical cylinder  top

ON

OFF

actuator(output Horizontal cylinder)(±R)

12:Horizontal cylinder  back/front

ON

OFF

actuator(output Horizontal cylinder)(±R)

13:Horizontal cylinder  front/back

ON

OFF

dynamic sensor(output Horizontal cylinder)(±R)

14:Horizontal cylinder  back/front

ON

OFF

static sensor(output Horizontal cylinder)(+R)

15:Horizontal cylinder  front

ON

OFF

static sensor(output Horizontal cylinder)(+R)

16:Horizontal cylinder  back

ON

OFF

# FIG. 20

$x$

input vector

1 2 3 4
| 1 | | | 0 |

1 2 3 4
| 0 | | | 1 |

relation vector

$m_p$
| 1 | 0 | 0 | 0 |

$m_n$
| 0 | 0 | 0 | 1 |

bit-wise AND

$p_p = m_p \times x$
| 1 | 0 | 0 | 0 |

$p_n = m_n \times \bar{x}$
| 0 | 0 | 0 | 1 |

$$p_p = m_p$$

$$p_n = m_n$$

Note:blank parts of input vector do not affect the
response whether they are ' 1' or ' 0'

example of significant response in AND type

# FIG. 21

$x$

input vector

1 2 3 4
| 1 | | | 1 |

$\bar{x}$

1 2 3 4
| 0 | | | 0 |

relation vector

$m_p$
| 1 | 0 | 0 | 0 |

$m_n$
| 0 | 0 | 0 | 1 |

bit-wise AND

$p_p = m_p \times x$
| 1 | 0 | 0 | 0 |

$p_n = m_n \times \bar{x}$
| 0 | 0 | 0 | 0 |

$$p_p = m_p$$

$$p_n \neq m_n$$

Note:blank parts of input vector do not affect the
response whether they are ' 1' or ' 0'

example of insignificant response in AND type

# FIG. 22

$x$

| | 1 | 2 | 3 | 4 | | | 1 | 2 | 3 | 4 |

input vector

$m_p$

relation vector

$p_p = m_p \times x$

bit-wise AND

$$p_p = m_p$$

$m_n$

$p_n = m_n \times \bar{x}$

$$p_n = m_n$$

Note:blank parts of input vector do not affect the
response whether they are '1' or '0'

example of significant response of AND type

# FIG. 23

$x$  $\bar{x}$

input vector

$m_p$

relation vector

$p_p = m_p \times x$

bit-wise AND

$$p_p = m_p$$

$m_n$

$p_n = m_n \times \bar{x}$

$$p_n \neq m_n$$

Note:blank parts of input vector do not affect the
response whether they are '1' or '0'

example of insignificant response of AND type

# FIG. 24

|  |  |  | positive part | | | | | | | | | | | | | negative part | | | | | | | | | | | | |
|---|---|---|---|---|---|---|---|---|---|---|---|---|---|---|---|---|---|---|---|---|---|---|---|---|---|---|---|---|---|
| No | output | time | type | attr | 1 | 2 | 3 | 4 | 5 | 6 | 7 | 8 | 9 | 10 | 11 | 12 | 13 | 1 | 2 | 3 | 4 | 5 | 6 | 7 | 8 | 9 | 10 | 11 | 12 | 13 |
| 1 | 3 | 1 | AND | 1 | 1 |  |  |  |  |  |  |  |  |  |  |  |  |  |  |  |  |  |  |  | 1 |  |  |  |  |  |
| 2 | 3 | 2 | AND | 0 |  |  |  |  |  |  |  | 1 |  |  |  |  |  |  |  | 1 |  |  |  |  |  |  |  |  |  |  |
| 3 | 5 | 2 | AND | 1 |  |  |  |  |  |  |  |  |  |  |  |  |  |  |  |  | 1 |  |  |  |  |  |  |  |  |  |
| 4 | 1 | 3 | AND | 1 |  |  |  |  |  |  |  |  | 1 |  |  |  |  |  |  |  | 1 |  |  |  |  |  |  |  |  |  |
| 5 | 1 | 4 | AND | 0 |  |  |  |  | 1 |  |  |  |  |  |  |  |  | 1 |  |  |  |  |  |  |  |  |  |  |  |  |
| 6 | 6 | 4 | AND | 1 |  |  |  |  |  |  |  |  |  |  |  |  |  |  |  |  |  |  |  |  |  |  |  |  |  |  |
| 7 | 2 | 5 | AND | 1 |  |  |  |  |  |  |  |  |  | 1 |  |  |  |  |  |  |  |  | 1 |  |  |  |  |  |  |  |
| 8 | 2 | 6 | AND | 0 |  |  |  |  |  | 1 |  |  |  |  |  |  |  |  |  |  |  |  |  |  | 1 |  |  |  |  |  |
| 9 | 4 | 6 | AND | 1 |  |  |  |  |  | 1 |  |  |  |  |  |  |  |  |  |  |  |  |  |  | 1 |  |  |  |  |  |
| 10 | 5 | 6 | AND | 0 |  |  |  |  |  |  |  |  |  |  |  |  |  |  |  | 1 |  |  |  |  | 1 |  |  |  |  |  |
| 11 | 4 | 7 | AND | 0 |  |  |  |  |  |  | 1 |  |  |  |  |  |  | 1 | 1 |  |  |  |  |  |  |  |  |  |  |  |
| 12 | 6 | 7 | AND | 0 |  |  |  |  |  |  |  |  |  |  |  |  |  |  |  |  | 1 | 1 |  |  |  |  |  |  |  |  |

blanks stand for "0"

Relation matrix and related informations

# FIG. 25

# FIG. 26

# FIG. 27

input data

bits-setting

input vector   x [ν]

calculation of
output states
y =M · x [ν]

(for current time step)

output data

Concept of the execution of control

# FIG. 28

input state

x[0]

x[1]

current time step : $\tau$

current state index: s

Control data during execution

# FIG. 29

Input terms in simulation

| No | name | | category |
|----|------|--|----------|
| 1 | Starting signal | | input |
| 2 | Chuck delay timer | | input |
| 3 | Chuck timer | | input |
| 4 | Chuck open/close | | D-Sns |
| 5 | Chuck close | | S-Sns |
| 6 | Vertical cylinder | bottom/top | D-Sns |
| 7 | Vertical cylinder | top | S-Sns |
| 8 | Horizontal cylinder | back/front | D-Sns |
| 9 | Horizontal cylinder | front | S-Sns |
| 10 | Horizontal cylinder | back | S-Sns |

# FIG. 30

Sequence  mod(phase no:1 Picking
phase No:Picking
input

| No | unit | name | | | category | O |
|----|------|------|---|---|----------|---|
| 1 | 1 | Starting signal | | | input | ○ |
| 2 | 2 | Chuck delay timer | | | input | □ |
| 3 | 3 | Chuck timer | | | input | □ |
| 4 | 7 | Chuck  open/close | | | D-Sns | □ |
| 5 | 8 | Chuck  close | | | S-Sns | ○ |
| 6 | 10 | Vertical cylinder | bottom/top | | D-Sns | □ |
| 7 | 11 | Vertical cylinder | top | | S-Sns | ○ |
| 8 | 14 | Horizontal cylinder | back/front | D-Sns | □ |
| 9 | 15 | Horizontal cylinder | front | | S-Sns | ○ |
| 10 | 16 | Horizontal cylinder | back | | S-Sns | ● |

Sequence  mod(phase no:1 Picking
phase No:Picking
output

| No | unit | name | | | category | O |
|----|------|------|---|---|----------|---|
| 1 | 4 | Chuck delay timer | | | Tmr | ○ |
| 2 | 5 | Chuck timer | | | Tmr | ○ |
| 3 | 6 | Chuck  open/close | | | Act | ○ |
| 4 | 9 | Vertical cylinder | bottom/top | | Act | ○ |
| 5 | 12 | Horizontal cylinder | back/front | Act | ○ |
| 6 | 13 | Horizontal cylinder | front/back | Act | ○ |

# FIG. 31

Sequence mod¢phase no:1 Picking
phase No:Picking
input

| No | unit | name | | category | 0 | 1 | new |
|----|------|------|---|----------|---|---|-----|
| 1 | 1 | Starting signal | | input | O | ● | O |
| 2 | 2 | Chuck delay timer | | input | □ | □ | □ |
| 3 | 3 | Chuck timer | | input | □ | □ | □ |
| 4 | 7 | Chuck open/close | | D-Sns | □ | □ | □ |
| 5 | 8 | Chuck close | | S-Sns | O | O | O |
| 6 | 10 | Vertical cylinder | bottom/top | D-Sns | □ | □ | □ |
| 7 | 11 | Vertical cylinder | top | S-Sns | O | O | O |
| 8 | 14 | Horizontal cylinder | back/front | D-Sns | □ | ■ | ■ |
| 9 | 15 | Horizontal cylinder | front | S-Sns | O | O | O |
| 10 | 16 | Horizontal cylinder | back | S-Sns | O | ● | ● |

Sequence mod¢phase no:1 Picking
phase No:Picking
output

| No | unit | name | | category | 0 | 1 |
|----|------|------|---|----------|---|---|
| 1 | 4 | Chuck delay timer | | Tmr | O | O |
| 2 | 5 | Chuck timer | | Tmr | O | O |
| 3 | 6 | Chuck open/close | | Act | O | O |
| 4 | 9 | Vertical cylinder | bottom/top | Act | O | O |
| 5 | 12 | Horizontal cylinder | back/front | Act | O | ● |
| 6 | 13 | Horizontal cylinder | front/back | Act | O | O |

# FIG. 32

EP 1 077 396 A1

Action chart(1)  
Normal operation

| | 0 | 1 | 2 | 3 | 4 | 5 | 6 | 7 | 8 | 9 | A | 1 | 2 | 3 | 4 | 5 |

input[Q](+P)(+R)

1:3F-calling signal

input[Q](+P)(+R)

2:2F-calling signal

input[Q](+P)(+R)

3:1F-calling signal

output[S](+R)

4:Lift

# FIG. 33

Timing chart(1)
Normal operation

static sensor(output Lift) (+R)
1:Lift 3F

static sensor(output Lift) (+R)
2:Lift 2F

static sensor(output Lift) (+R)
3:Lift 1F

input(input 3F-calling signal)[Q] (+P) (+R)
4:3F-calling signal

input(input 2F-calling signal)[Q] (+P) (+R)
5:2F-calling signal

EP 1 077 396 A1

# FIG. 34

Timing chart(1)
Normal operation

input(input 1F-calling signal) [Q] (+P) (+R)

6:1F-calling signal — ON/OFF

actuator(output Lift) (±R)

7:Lift 1F/3F — ON/OFF

actuator(output Lift) (±R)

8:Lift 3F/1F — ON/OFF

dynamic sensor(output Lift) (±R)

9:Lift 1F/3F — ON/OFF

dynamic sensor(output Lift) (±R)

10:Lift 3F/1F — ON/OFF

EP 1 077 396 A1

# FIG. 35

Action chart(1)
General

input[Q] (+P) (+R)

1:Start switch

input[Q] (+P) (+R)

2:Stop switch

input[S] (+R)

3:Reversing lever

output[Q] (±R)

4:Starting air

output[Q] (±R)

5:Fuel

output[S] (+R)

6:Camshaft

EP 1 077 396 A1

# FIG. 36

Action chart(1)
General

analog(+R) [−500/500]

7:Revolution speed

analog(+R) [0/10]

8:Lube oil pressure

input[Q] (+R)

9:Emergency stop switch

EP 1 077 396 A1

# FIG. 37

Simulation   Logical mode: Ahead start   Relation No:1
Input signals

| No | name | category | ON | OFF |
|----|------|----------|----|----|
| 1 | Start switch | Input | ● | ○ |
| 2 | Stop switch | Input | ○ | ○ |
| 3 | Emergency stop switch | Input | ○ | ○ |
| 4 | Reversing lever astern/ahead | D_Sns | ○ | ○ |
| 5 | Reversing lever ahead/astern | D_Sns | ○ | ○ |
| 6 | Reversing lever ahead | S_Sns | ○ | ○ |
| 7 | Reversing lever astern | S_Sns | ● | ○ |
| 8 | Camshaft   astern/ahead | D_Sns | ○ | ○ |
| 9 | Camshaft   ahead/astern | D_Sns | ○ | ○ |
| 10 | Camshaft   ahead | S_Sns | ● | ○ |
| 11 | Camshaft   astern | S_Sns | ○ | ○ |
| 12 | Revolution speed   >120 | Mry | ○ | ○ |
| 13 | Revolution speed   >20 | Mry | ○ | ○ |
| 14 | Revolution speed   <-20 | Mry | ○ | ○ |
| 15 | Revolution speed   <-120 | Mry | ○ | ○ |
| 16 | Lube oil pressure   <3 | Mry | ○ | ○ |

Simulation   Logical mode: Ahead start   Relation No:1
Output signals

| No | name | category | ON | OFF |
|----|------|----------|----|----|
| 1 | Ahead start<sequencial> | AND | ● | ○ |

# FIG. 38

Combined mode for selection

| sequence | logic | |
|---|---|---|
| | no-effect phase | |
| selected | | |
| | | |

arranged acc to priority

Combined mode

| sequence | logic | |
|---|---|---|
| | | |
| currently executed phase | | |
| | | |

number of combined phases

Concept of execution of control

# FIG. 39

external input signals          external output signals

internal input
signals

input states changed

scanning

selected
combined phase

logical phase          sequencial
phase

current time
step

vector
operation          changed output states

oepraion limited to boxes with heavy lines

Concept of execution of control

# FIG. 40

Action chart(1)
General

input[Q] (+P) (+R)

1:Start switch

input[Q] (+P) (+R)

2:Stop switch

input[S] (+R)

3:Reversing lever

output[Q] (±R)

4:Starting air

output[Q] (±R)

5:Fuel

output[S] (+R)

6:Camshaft

analog(+R) [-500/500]

7:Revolution speed

analog(+R) [0/10]

8:Lube oil pressure

input[Q] (+R)

9:Emergency stop switch

# FIG. 41

Timing chart(1)                    0   1   2   3   4   5
General

input(input Start switch)[Q](+P)(+R)

1:Start switch

output(output Starting air)[Q](±R)

8:Starting air

output(output Fuel)[Q](±R)

9:Fuel

meter relay>Revolution speed  >120)(+R)

16:Revolution speed  >120

meter relay>Revolution speed  >20)(+R)

17:Revolution speed  >20

# FIG. 42

|  | 1 | 2 | 3 | 4 | 5 | 6 | 7 | 8 | 9 | 10 | 11 | 12 | 13 |
|---|---|---|---|---|---|---|---|---|---|---|---|---|---|
| positive part | 1 |  |  |  |  | 1 |  | 1 |  | 1 |  |  |  |
| negative part |  | 1 | 1 | 1 | 1 |  | 1 |  | 1 |  | 1 | 1 | 1 |

blanks stand for "0"

# FIG. 43

|  | 1 | 2 | 3 | 4 | 5 | 6 | 7 | 8 | 9 | 10 | 11 | 12 | 13 |
|---|---|---|---|---|---|---|---|---|---|---|---|---|---|
| positive part | 1 |  |  |  |  |  |  |  |  |  |  |  |  |
| negative part |  |  |  |  |  |  |  |  |  |  | 1 |  |  |

blanks stand for "0"

# FIG. 44

output   y

(1) input x 1

(2) input x 2

(3) input x 3

a case including combined OR

# FIG. 45

|  | positive | | | negative | | |
|---|---|---|---|---|---|---|
|  | 1 | 2 | 3 | 1 | 2 | 3 |
| relation vector   m | 1 | 0 | 0 | 0 | 0 | 0 |
| OR relation vector   c | 0 | 0 | 1 | 0 | 1 | 0 |

relation vectors including combined OR

# FIG. 46

back end LS    front end LS    work detection LS

horizontal
cylinder

chuck

top end LS

vertical
cylinder

chuck open

chuck close

horizontal SOL    vertical SOL    chuck SOL

air

EP 1 077 396 A1

EP 1 077 396 A1

# FIG. 47

57

# FIG. 48

# FIG. 49

# INTERNATIONAL SEARCH REPORT

| | International application No. |
|---|---|
| | PCT/JP99/00137 |

**A. CLASSIFICATION OF SUBJECT MATTER**
Int.Cl⁶ G05B19/05

According to International Patent Classification (IPC) or to both national classification and IPC

**B. FIELDS SEARCHED**

Minimum documentation searched (classification system followed by classification symbols)
Int.Cl⁶ G05B19/05

Documentation searched other than minimum documentation to the extent that such documents are included in the fields searched

| | | | |
|---|---|---|---|
| Jitsuyo Shinan Koho | 1926-1998 | Toroku Jitsuyo Shinan Koho | 1994-1998 |
| Kokai Jitsuyo Shinan Koho | 1971-1998 | Jitsuyo Shinan Toroku Koho | 1996-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 1-116803, A (Honda Motor Co., Ltd.), 9 May, 1989 (09. 05. 89), All pages (Family: none) | 1-6 |
| X | JP, 1-93803, A (Honda Motor Co., Ltd.), 12 April, 1989 (12. 04. 89), All pages (Family: none) | 1-6 |
| X | JP, 1-95304, A (Honda Motor Co., Ltd.), 13 April, 1989 (13. 04. 89), All pages (Family: none) | 1-6 |
| Y | JP, 58-158704, A (Hitachi,Ltd.), 21 September, 1983 (21. 09. 83), All pages (Family: none) | 1-6 |
| Y | JP, 51-19289, A (Yokogawa Electric Corp.), 16 February, 1976 (16. 02. 76), All pages (Family: none) | 1-6 |

| ☒ Further documents are listed in the continuation of Box C. | ☐ See patent family annex. |
|---|---|

| * Special categories of cited documents: | "T" later document published after the international filing date or priority |
|---|---|
| "A" document defining the general state of the art which is not considered to be of particular relevance | date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 February, 1999 (19. 02. 99) | 9 March, 1999 (09. 03. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| | International application No. |
|---|---|
| | PCT/JP99/00137 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP, 4-145501, A  (Nissei Jushi Kogyo K.K.), 19 May, 1992 (19. 05. 92), All pages  (Family: none) | 1-6 |
| Y | JP, 60-6875, A  (Mitsubishi Electric Corp.), 14 January, 1985 (14. 01. 85), All pages  (Family: none) | 1-6 |

Form PCT/ISA/210 (continuation of second sheet) (July 1992)